# EUROPEAN PATENT APPLICATION

(11) **EP 4 769 120 A1**
(43) Date of publication of application: **01.07.2026**
(21) Application number: 25223036.2
(22) Date of filing: 12.12.2025
(51) Int. Cl.: G06F 8/38, G06F 9/451

(54) **USING LARGE LANGUAGE MODELS TO GENERATE USER INTERFACE COMPONENTS**

(30) Priority: 26.12.2024 US 202463738963 P
(71) Applicant: Google LLC, Mountain View, CA 94043 (US)
(72) Inventor: Morrino, Michael Digman, Mountain View, 94043 (US); Geilfuss, Jr., Bradley E., Mountain View, 94043 (US); Prag, Anders Johan, Mountain View, 94043 (US); Wang, Xiaoxuan, Mountain View, 94043 (US); Sibigtroth, Matthew, Mountain View, 94043 (US); Bertran, Ishac, Mountain View, 94043 (US); Ling, Gaetano, Mountain View, 94043 (US); Cornwell, Jason Briggs, Mountain View, 94043 (US)
(74) Representative: Collingwood-Pierce, Alexandra Isobel Seymour

(57) **Abstract**

An example computing system retrieves information from one or more applications, and receives an indication of a natural language input. The computing system applies a machine learning model to at least a portion of the information and at least a portion of the indication of the natural language input to generate instructions for generating at least one graphical component, e.g., a custom widget. The instructions may include a temporal parameter for the at least one graphical component, in which the computing system may update, based on the temporal parameter, the instructions for generating the at least one graphical component to update the at least one graphical component.

## Description

### CROSS REFERENCE TO RELATED APPLICATION

This application claims the benefit of US Provisional Patent Application No. 63/738,963, filed 26 December 2024, the entire contents of which is incorporated herein by reference.

### BACKGROUND

Applications executed on computing devices may provide a wide variety of functionality to users, which may help them perform various tasks. However, users must typically interact with multiple user interface elements and/or screens of multiple applications before they are able to access such functionality and complete such tasks. Furthermore, users may find it challenging and/or time-consuming to navigate through entire applications, and may find it difficult to complete tasks due to information being stored across multiple different applications.

### SUMMARY

In general, techniques of this disclosure are directed to techniques for applying a large language model to natural language input in order to generate custom graphical components that dynamically update based on a temporal parameter, e.g., a refresh rate, a "useful until" date, a time duration, a start time, an end time, a day of the week, month, year, etc. A remote computing device (e.g., a smartphone) may include a number of applications, each providing functions accessible via APIs. A computing system may retrieve, using one or more application programming interfaces, information from the applications, e.g., information associated with the plurality of functions. The computing system may also receive, e.g., from a user operating the remote computing device, an indication of a natural language input associated with the plurality of functions. For example, the computing system may receive an indication of a voice input that includes multiple commands and/or user intents, such as, e.g., "Remind me to arrange childcare, book a doctor's appointment for Jane, schedule the meeting with John, order dinner, and call the electrician." The computing system may apply a machine learning model (e.g., a large language model) to the natural language input to identify one or more user intents. Using the retrieved information, the computing system may apply the machine learning model to the one or more identified user intents to generate a set of instructions, e.g., code, that provides corresponding graphical components and/or application functionality for fulfilling the one or more identified user intents. Furthermore, each graphical component and/or graphical elements included with a graphical component may be refreshed, deleted, etc. based on a temporal parameter. An improved human-computer interface may therefore be provided. As an example, a graphical component that is generated to fulfill the user intent of receiving a reminder for the meeting with John may be automatically deleted from a home screen of the user's device after the date and time for which the meeting was scheduled.

In one example, the disclosure is directed toward a method that includes retrieving, by a computing system, information from one or more applications, and receiving, by the computing system, an indication of a natural language input. The method further includes applying, by the computing system, a machine learning model to at least a portion of the information and at least a portion of the indication of the natural language input to generate instructions for generating at least one graphical component, wherein the instructions include a temporal parameter for the at least one graphical component. The method further includes updating, by the computing system, and based on the temporal parameter, the instructions for generating the at least one graphical component to update the at least one graphical component.

In another example, the disclosure is directed toward a computing system that includes one or more processors, and one or more storage devices that store instructions. The instructions, when executed by the one or more processors, cause the one or more processors to retrieve information from one or more applications, and receive an indication of a natural language input. The instructions further cause the one or more processors to apply a machine learning model to at least a portion of the information and at least a portion of the indication of the natural language input to generate instructions for generating at least one graphical component, wherein the instructions include a temporal parameter for the at least one graphical component. The instructions further cause the one or more processors to update, based on the temporal parameter, the instructions for generating the at least one graphical component to update the at least one graphical component.

In another example, the disclosure is directed toward a non-transitory computer-readable storage medium encoded with instructions that, when executed by one or more processors, cause one or more processors to retrieve information from one or more applications, and receive an indication of a natural language input. The instructions further cause the one or more processors to apply a machine learning model to at least a portion of the information and at least a portion of the indication of the natural language input to generate instructions for generating at least one graphical component, wherein the instructions include a temporal parameter for the at least one graphical component. The instructions further cause the one or more processors to update, based on the temporal parameter, the instructions for generating the at least one graphical component to update the at least one graphical component.

In another example, the disclosure is directed toward a computer program product for generating custom graphical components. The computer program product includes one or more instructions that, when executed by at least one processor, cause the at least one processor to retrieve information from one or more applications, and receive an indication of a natural language input. The instructions further cause the one or more processors to apply a machine learning model to at least a portion of the information and at least a portion of the indication of the natural language input to generate instructions for generating at least one graphical component, wherein the instructions include a temporal parameter for the at least one graphical component. The instructions further cause the one or more processors to update, based on the temporal parameter, the instructions for generating the at least one graphical component to update the at least one graphical component.

The details of one or more examples of the disclosure are set forth in the accompanying drawings and the description below. Other features, objects, and advantages of the disclosure will be apparent from the description and drawings, and from the claims.

### BRIEF DESCRIPTION OF THE FIGURES

FIG. 1 is a conceptual diagram illustrating an example computing system for generating custom graphical components that dynamically update based on a temporal parameter, in accordance with one or more techniques of this disclosure.
FIG. 2 is a block diagram illustrating another example computing system for applying a large language model to natural language input in order to generate custom graphical components that dynamically update based on a temporal parameter, in accordance with one or more techniques of this disclosure.
FIG. 3A is a conceptual diagram illustrating an example training process for a machine learning module, in accordance with one or more techniques of this disclosure.
FIG. 3B is a conceptual diagram illustrating an example trained machine learning module, in accordance with one or more techniques of this disclosure.
FIG. 3C is a conceptual diagram illustrating a machine learning module configured to apply a large language model that accepts natural language input and provides code for corresponding graphical user interfaces and application functionality as output, in accordance with one or more techniques of this disclosure.
FIGS. 4A-4C are conceptual diagrams illustrating another example computing system for generating custom graphical components that dynamically update based on a temporal parameter, in accordance with one or more techniques of this disclosure.
FIG. 5 is a flowchart illustrating an example operation for generating custom graphical components that dynamically update based on a temporal parameter, in accordance with one or more techniques of this disclosure.

### DETAILED DESCRIPTION

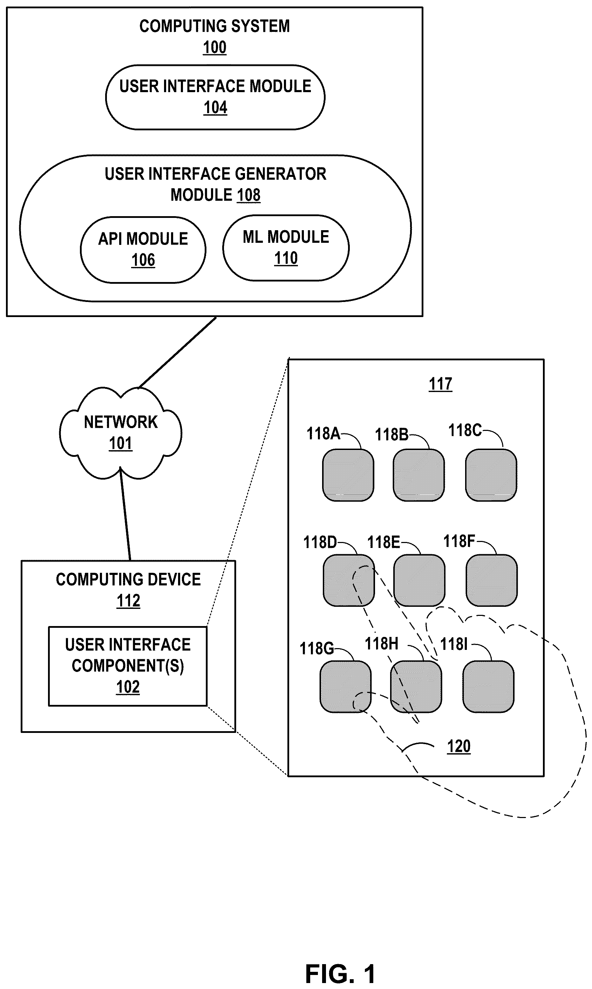

FIG. 1 is a conceptual diagram illustrating an example computing system for generating custom graphical components that dynamically update based on a temporal parameter, in accordance with one or more techniques of this disclosure. In the example of FIG. 1, a user 120 interacts with computing device 112 that is in communication with computing system 100. In some examples, some or all of the components and/or functionality attributed to computing system 100 may be implemented or performed by computing device 112.

While not explicitly shown in the example of FIG. 1, computing system 100 may be implemented on a plurality of computing devices that may include, but are not limited to, portable, mobile, or other devices, such as mobile phones (including smartphones), laptop computers, desktop computers, tablet computers, smart television platforms, automobile platforms, server computers, mainframes, a gaming system, a media player, an e-book reader, an automobile navigation system, a virtual reality (VR) device, an augmented reality (AR) device, AR/VR glasses, a wearable computing device (e.g., a computerized watch, computerized eyewear such as AI glasses, a computerized glove, a computerized ring, etc.), or any other type of mobile or non-mobile computing device. In some examples, computing system 100 may represent a cloud computing system that provides one or more services via network 101. That is, in some examples, computing system 100 may be a distributed computing system.

Computing system 100 may communicate with computing device 112 via network 101. Network 101 may include any public or private communication network, such as a cellular network, Wi-Fi network, a direct cell-to-satellite communication network, or other type of network for transmitting data between computing system 100 and computing device 112. In some examples, network 101 may represent one or more packet switched networks, such as the Internet. Computing device 112 may send and receive data to and from computing system 100 across network 101 using any suitable communication techniques. For example, computing system 100 and computing device 112 may each be operatively coupled to network 101 using respective network links. Network 101 may include network hubs, network switches, network routers, etc., that are operatively inter-coupled thereby providing for the exchange of information between computing device 112 and computing system 100. In some examples, network links of network 101 may be Ethernet, ATM or other network connections. Such connections may include wireless and/or wired connections.

As shown in the example of FIG. 1, computing device 112 includes one or more user interface (UI) components ("UI components 102"). UI components 102 of computing device 112 may be configured to function as input devices and/or output devices for computing device 112. UI components 102 may be implemented using various technologies. For instance, UI components 102 may be configured to receive input from user 120 through tactile, audio, and/or video feedback. Examples of input devices include a presence-sensitive display, a presence-sensitive or touch-sensitive input device (such as that shown in FIG. 1), a mouse, a keyboard, a voice responsive system, video camera, microphone or any other type of device for detecting a command from user 120. In some examples, a presence-sensitive display includes a touch-sensitive or presence-sensitive input screen, such as a resistive touchscreen, a surface acoustic wave touchscreen, a capacitive touchscreen, a projective capacitive touchscreen, a pressure sensitive screen, an acoustic pulse recognition touch screen, or another presence-sensitive technology. That is, UI components 102 of computing device 112 may include a presence-sensitive device that may receive tactile input from user 120. UI components 102 may receive indications of the tactile input by detecting one or more gestures from user 120 (e.g., when user 120 touches or points to one or more locations of UI components 102 with a finger or a stylus pen).

UI components 102 may additionally or alternatively be configured to function as an output device by providing output to user 120 using tactile, audio, or video stimuli. Examples of output devices include a sound card, a video graphics adapter card, or any of one or more display devices, such as a liquid crystal display (LCD), dot matrix display, light emitting diode (LED) display, microLED, miniLED, organic light-emitting diode (OLED) display, e-ink, or similar monochrome or color display capable of outputting visible information to user 120. Additional examples of an output device include a speaker, a haptic device, or other device that can generate intelligible output to a user. For instance, UI components 102 may present output to user 120 as a graphical user interface that may be associated with functionality provided by computing device 112. In this way, UI components 102 may present various user interfaces of applications executing at or accessible by computing device 112 (e.g., an electronic message application, an Internet browser application, etc.). User 120 may interact with a respective user interface of an application to cause computing device 112 to perform operations relating to a function provided by the application.

In some examples, UI components 102 of computing device 112 may detect two-dimensional and/or three-dimensional gestures as input from user 120. For instance, a sensor of UI components 102 may detect the user's movement (e.g., moving a hand, an arm, a pen, a stylus, etc.) within a threshold distance of the sensor of UI components 102. UI components 102 may determine a two- or three-dimensional vector representation of the movement and correlate the vector representation to a gesture input (e.g., a hand-wave, a pinch, a clap, a pen stroke, etc.) that has multiple dimensions. In other words, UI components 102 may, in some examples, detect a multidimensional gesture without requiring the user to gesture at or near a screen or surface at which UI components 102 output information for display. Instead, UI components 102 may detect a multi-dimensional gesture performed at or near a sensor which may or may not be located near the screen or surface at which UI components 102 output information for display.

In the example of FIG. 1, computing system 100 includes user interface (UI) module 104. Module 104 may perform operations described herein using hardware, software, firmware, or a mixture thereof residing in and/or executing at computing system 100. Computing system 100 may execute module 104 with one processor or with multiple processors. In some examples, computing system 100 may execute module 104 as a virtual machine executing on underlying hardware. Module 104 may execute as one or more services of an operating system or computing platform or may execute as one or more executable programs at an application layer of a computing platform.

UI module 104, as shown in the example of FIG. 1, may be operable by computing system 100 to perform one or more functions, such as receive input and send indications of such input to other components associated with computing system 100. UI module 104 may also receive data from components associated with computing system 100. Using the data received, UI module 104 may cause other components associated with computing system 100, such as UI components 102, to provide output based on the data. For instance, UI module 104 may send data to UI components 102 of computing device 112 to display a graphical user interface (GUI), such as GUI 117.

In general, user 120 may be provided with an opportunity to provide input to control whether programs or features of computing device 112 and/or computing system 100 can collect and make use of user information (e.g., user 120's personal data, information about user 120's current location, location history, activity, etc.), or to dictate whether and/or how computing device 112 and/or computing system 100 may receive content that may be relevant to user 120. Other user information may include data that includes the context of user usage, either obtained from an application itself or from other sources. Examples of usage context may include breadth of share (sharing publicly, or with a large group, or privately, or a specific person), context of share, etc. When permitted by the user, additional data can include the state of the device, e.g., the location of the device, the apps running on the device, etc. In addition, certain data may be treated in one or more ways before it is stored or used by computing device 112 and/or computing system 100 so that personally identifiable information is removed. For example, a user's identity may be treated so that no personally identifiable information can be determined about the user, or a user's geographic location may be generalized where location information is obtained (such as to a city, ZIP code, or state level), so that a particular location of a user cannot be determined. Thus, user 120 may have control over how information is collected about them and used by computing device 112 and/or computing system 100. For example, user 120 may be prompted by computing device 112 to provide explicit consent for computing device 112 and/or computing system 100 to retrieve and/or store any or all of user 120's data. In some examples, an action log executed on computing device 112 may provide user 120 a ledger of activity, which may show any automations or applications running in the background of computing device 112, as well as an accurate log of all UI generator module 108 activity.

In the example of FIG. 1, graphical user interface (GUI) 117 may be an example representation of a mobile phone home screen. GUI 117 may include a plurality of user interface elements and/or user interface components. For example, as shown in FIG. 1, GUI 117 includes user interface components 118A-118I, which may be referred to as "widgets" and may be referred to herein collectively as "widgets 118." In general, a widget may be a smaller GUI or GUI element that provides specific functionality or access to a larger application. One or more applications may be installed and may execute at computing device 112. For example, some example applications may be a banking application, a calendar application, a messaging application, a web browser application, etc. As such, computing device 112 may include one or more applications, in which the one or more applications may be accessed via one or more widgets displayed on GUI 117, such as one or more of widgets 118A-118I.

In general, an application from the one or more applications may include information, e.g., data, instructions, etc., that can be retrieved by computing system 100, e.g., via API module 106. In general, an application from the one or more applications may include one or more functions. The one or more functions may refer to functions, or functionality, e.g., capabilities or features, that are provided by the values, settings, or other data that are directly embedded into the source code of the application, rather than those that are dynamically generated or configurable at runtime. An application may include functionality provided by values, logic, etc. that are fixed, e.g., "hard-coded", in an application's source code, and cannot be easily changed without modifying the code itself. The one or more functions may be considered statically defined functions, or functions that are predefined at compile time or build time and do not change during execution. As such, an example widget on GUI 117 that "provides the functionality of an application" may be considered a graphical component that is generated based on and/or provides the statically defined capabilities or features of the application.

In general, computing system 100 may retrieve, e.g., via API module 106, information from the one or more applications installed on computing device 112. In some examples, the information may be retrieved from a device settings application. Thus, in general, the information retrieved by API module 106 may include system-level information (e.g., parameters and configurations that govern how a device operates, such as Wi-Fi, display brightness, notifications settings, etc.), and/or application-level information (e.g., user preferences for applications, functional data specific to the operations or state of an application, information associated with application functionality, etc.).

In some examples, an application may include an API that enables external applications or modules to interact with and use the data stored by the application. As such, API module 106 may receive information from the one or more applications, e.g., an API response. As an example, a banking application may include predefined or statically defined functionality for a button that a user may interact with to have funds transferred from their bank account. API module 106 may use the banking application API to retrieve the information associated with the banking application's functions, which may include, for example, instructions for generating the button UI, and a value for the current balance of the user's bank account, but may not include all of the predefined or statically defined functionality or logic for determining and displaying the value for the current balance of the user's bank account.

As such, the one or more applications may be considered to include a plurality of predefined functions. For example, a calculator application may include predefined functionality for performing various arithmetic and mathematical operations, a browser application may include predefined functionality for accessing and browsing the Internet, a banking application may include predefined functionality for transferring funds, etc. As such, many applications executed on computing devices may include predefined functionality for performing various tasks, such as responding to messages, scheduling appointments, booking reservations, browsing the Internet, etc.

In general, users may need access to complex, time-sensitive, and important information to perform actions for everyday tasks. For instance, when packing for a trip, a user may have a complex question such as, "Do I need to pack an umbrella for my trip next week?" To answer such a question, the user may have to perform multiple time-consuming actions, such as checking the forecast for their trip location each day until the user has to leave. Furthermore, a user may find it difficult to complete tasks due to information being stored across multiple different applications, and due to information having the potential to change over time (e.g., a user may book a reservation at 7:00 PM, but later receive a message from a friend saying that time no longer works with their schedule). That is, the relevance and usefulness of this information and actions can change over time. Information, for example, may become out of date or no longer be useful to a user. A user may complete a task and no longer need functionality for performing that task.

Thus, users may prefer not only custom GUIs and graphical components that are more tailored to their personal preferences and provide "shortcuts" for performing tasks, but also custom GUIs and graphical components that can automatically update to provide the most recent and accurate information and/or functionality for performing tasks. Therefore, users may benefit from systems that can dynamically gather various data points, combine the data points, process and understand the data points, and present necessary information and actions in a way that's useful and actionable to users. Furthermore, users may benefit from GUIs, graphical components, and/or graphical elements included within graphical components that automatically update to display only the most recent and most accurate information, and/or provide functionality relevant to an uncompleted task. An improved human-computer interface may therefore be provided.

In the example of FIG. 1, one or more of widgets 118 may be considered a "custom" widget. In accordance with techniques of this disclosure, computing system 100 may include a user interface generator module 108 that applies a large language model to natural language input in order to dynamically generate custom graphical components that dynamically update based on a temporal parameter, e.g., a refresh rate, a "useful until" date, a time duration, a start time, an end time, a day of the week, month, year, etc. In the example of FIG. 1, user 120 may provide a natural language input (e.g., a request to create a custom widget, a query such as "Do I need to pack an umbrella for my trip next week?", a command such as "Send money to John," etc.), and user interface generator module 108 may receive an indication of the natural language input and generate, using information from the one or more applications, instructions for generating at least one custom widget to satisfy the user's intent (e.g., the at least one custom widget may provide functionality, display information, or perform other functions such that a user's intent may be fulfilled).

Specifically, with explicit consent from user 120, user interface generator module 108 may retrieve, via API module 106, information (e.g., API response data) associated with the plurality of functions included in the one or more applications executing at computing device 112. User interface generator module 108 may apply machine learning module 110 to at least a portion of the information and at least a portion of the indication of the natural language input to generate instructions for generating at least one graphical component, in which the instructions include a temporal parameter for the at least one graphical component.

For example, based on the information retrieved by API module 106, user interface generator module 108 may determine a rate at which information displayed by a custom widget should be refreshed, a date and/or time at which a custom widget should be deleted, etc. That is, in general, machine learning module 110 may determine, e.g., based on a prompt, a reasonable duration of relevance and when to refresh generated content. As such, user interface generator module 108 may not only generate instructions for generating graphical components that provide information and/or functionality for performing tasks, but also may also update the instructions based on temporal parameters indicative of time durations for which a respective graphical component and/or element is relevant, and/or when to refresh a respective graphical component and/or element. In some examples, machine learning module 110 may also determine an optimal way to present generated graphical components, such that information and functionality can be quickly accessible and understandable (especially through time) for a user. For example, machine learning module 110 may determine various sizes, layouts, etc. for the generated graphical components that best suit the user's desired goal (i.e., fulfills the user's intent). In this way, GUI 117 may only present relevant, accurate, and appropriately sized widgets for fulfilling user intents, and thus may not present an overwhelming amount of irrelevant and/or outdated graphical components and/or elements that may be displeasing to the user.

In general, with explicit consent from user 120, user interface generator module 108 may run continuously and be configured to monitor the content of one or more applications and/or user activity. In an example involving one or more applications executing on computing device 112, with explicit consent from user 120, user interface generator module 108 may run continuously in the background of computing device 112 and be configured to monitor the content of one or more applications executing at computing device 112 and/or user activity within computing device 112. In other words, API 106 receives explicit consent from user 120 to gather information from user 120 and one or more applications executing on computing device 112 operated by user 120. In general, user interface generator module 108 may receive an indication of a natural language input associated with one or more predefined or already available functions included in the one or more applications, again provided that user 120 has given explicit permission for computing system 100 to monitor/receive user 120's data.

In general, API module 106, which can be considered an API library, may include multiple APIs that can be used to access one or more application APIs. In some examples, API module 106 may provide information about user interface elements, events, and actions to assistive technologies (e.g., screen readers, magnification gestures, switch devices, etc.) provided by computing system 100 or computing device 112. In some examples, API module 106 may be configured to enable the exchanging of data in a standardized format. For example, API module 106 may support REST (Representational State Transfer), which is a widely-used architectural style for building APIs that use HTTP (Hypertext Transfer Protocol) to exchange data between applications.

In some examples, API module 106 may be configured to generate a stream of accessibility events as the user interacts with computing device 112 and applications executed on computing device 112. In some examples, these events may represent actions and changes in a user interface, such as button presses, text changes, and screen transitions. With explicit consent from user 120, user interface generator module 108 may receive and analyze these events to better understand how user 120 interacts with an application executing on computing device 112.

API module 106 may be configured to retrieve accessibility actions from applications executed on computing device 112. "Accessibility actions" may refer to different types of inputs that can be detected at a location associated with a UI component 102, such as mechanical inputs (e.g., a clicking of a button, a swiping of a screen, etc.), audio input (e.g., verbal command), or gesture control (e.g., triple tapping on a screen, hand wave, assistive gestures, etc.). As such, accessibility actions may provide users the ability to interact with an application or user interface element in multiple ways according to their needs. In some examples, with explicit consent from user 120, computing system 100 may determine which accessibility actions are frequently performed by user 120 when interacting with a GUI or application such that the new user interface generated by user interface generator module 108 can be better tailored for user 120's needs. In some examples, the information retrieved by API module 106 from computing device 112 may be stored by computing system 100 to identify potential accessibility issues and/or better understand how user 120 interacts with computing device 112. In some examples, user interface generator module 108 may use information retrieved from computing device 112 to determine the format, size, color scheme, accessibility features, or any other features to include in the set of instructions (e.g., new code) for generating new graphical components and/or functionality for performing tasks. In some examples, user interface generator module 108 may also provide users the ability to configure various accessibility and/or display options according to their needs. For example, user 120 may be able to adjust the user interface elements of a GUI, such as text size, enable color correction, set up magnification gestures, and configure gesture-based navigation.

In general, user interface generator module 108 may send information (e.g., location information, other contextual information, etc.) to ML module 110 only if computing system 100 receives permission from the user of computing device 112 to send the information. For example, in situations discussed here in which computing system 100 and/or computing device 112 may collect, transmit, or may make use of personal information about a user (e.g., location information, financial information, etc.), the user may be provided with an opportunity to control whether programs or features of computing system 100 can collect user information (e.g., information about a user's social network, a user's social actions or activities, a user's profession, a user's preferences, or a user's current location), or to control whether and/or how computing system 100 and/or computing device 112 may store and share user information. In addition, certain data may be treated in one or more ways before it is stored, transmitted, or used so that personally identifiable information is removed. For example, a user's identity may be treated so that no personally identifiable information can be determined about the user. Thus, the user may have control over how information is collected about the user and stored, transmitted, and/or used in accordance with techniques of this disclosure.

In general, user interface generator module 108 may receive, from computing device 112, and provided that user 120 has given explicit consent, an indication of a natural language input (e.g., audio or text input from user 120) associated with the plurality of functions included in the one or more applications. In other words, the indication of a natural language input may represent user 120's command or intent, and/or desired functionality for one or more applications. For example, an example natural language input may include a natural language utterance such as "Send money to John, book Jane's appointment..." As such, in some examples, a natural language input may represent user 120's commands and/or desires for performing one or more tasks, such as transferring funds, booking an appointment, etc. In some examples, user 120 may provide natural language input that represents any number of commands or intents. That is, user 120 may say aloud any number of tasks in a single utterance, which may include tasks pertaining to different functionality included in different applications. In general, "fulfilling one or more user intents" may refer to providing functionality for performing one or more identified tasks via custom graphical components, presenting information via custom graphical components, and the like.

In general, API module 106 may be configured to retrieve information (e.g., data) using one or more application APIs for the applications executing on computing device 112, which user interface generator module 108 may interpret in order to understand the functionality provided by the one or more applications. User interface generator module 108 may further use the retrieved information to contextualize the indication of a natural language input when applying machine learning module 110. As one example, a natural language input may include a natural language utterance such as, "Send the money to John." In this example, while John is explicitly deemed the recipient of the money, the user has not specified an amount of money to send. However, user interface generator module 108 may retrieve, using API module 106, information associated with predefined functions included in, for example, a messaging application and a banking application. User interface generator module 108 may receive, with explicit consent from user 120, data from the applications, such as the content of a message received within the messaging application, and a list of a user's trusted contacts stored within the banking application. User interface generator module 108 may retrieve, for example, data indicative of a message received from John D. that includes the phrase, "Can you send me $20?", and a username associated with John D.'s banking application profile. Therefore, computing system 100 may determine that the input command of "Send the money to John" indicates a task of sending $20 to John D. using the functionality of the banking application. As such, with explicit user consent, computing system 100 may perform tasks using context information and/or user data sourced from one or more applications included in computing device 112. In this way, in some examples, computing system 100 may interpolate natural language input without having to request that users provide additional input for clarification.

Using the information associated with the plurality of functions, computing system 100 may apply machine learning module 110 to the one or more identified tasks to generate a set of instructions, e.g., code. In general, machine learning module 110 may generate the set of instructions using a large language model, in which the set of instructions may be generated based on one or more of application functionality, capabilities, and/or attributes included in the information associated with the plurality of functions, contextual information (e.g., user data), and user input received by the computing system. That is, using the information associated with the plurality of functions, a prompt may be generated by machine learning module 110, in which the prompt may specify output format (e.g., javascript code), allowed data types, a UI component library that can be used to build an end result UI, an API library including APIs that can be used to retrieve data at runtime, e.g., predefined APIs or "task APIs" configured to retrieve the information associated with the plurality of functions, APIs for accessing sub-LLMs (e.g., smaller and/or specialized LLMs that focus on a particular domain or task within a larger LLM system), sub-prompts (e.g., smaller and/or more specific prompts that are part of a larger, more complex prompt) for disambiguation steps such as "Which John?", etc., user input (e.g., the identified tasks), and context information (e.g., relevant user data). As such, the set of instructions may be, for example, generated javascript code that returns one or more UI components from the UI component library, in which the UI components may display or use information retrieved by API module 106. In this way, the UI components from the UI component library may be considered custom user interfaces and widgets that are dynamically generated based on identified tasks, and the custom widgets may enable users to access functionality for performing the identified tasks.

Furthermore, in general, the set of instructions may be dynamically generated at runtime based on user input and retrieved information, including data associated with the predefined or statically defined functions, capabilities, or features from the one or more applications. That is, the set of instructions may include dynamically generated or configurable functionality that may adapt or change based on input data and/or other conditions at runtime. In some examples, the set of instructions may include combined functionality, e.g., functions from the one or more applications that are combined with other functions from the one or more applications to provide functionality for performing an identified task. As such, the set of instructions may be considered generated code that provides corresponding graphical user interfaces and application functionality based on user input.

The set of instructions may be associated with or provide at least one function for performing a respective task from the one or more tasks, e.g., the set of instructions may provide a user's desired functionality for completing the one or more tasks. As such, even if user 120's desired functionality for performing tasks is not predefined by a particular application, i.e., included in the plurality of functions, computing system 100 may generate new code that provides user 120's desired functionality, so long as the desired functionality is determined to be a possible functionality for the one or more applications (e.g., machine learning module 110 may determine whether the desired functionality is reasonable for the one or more applications). For example, continuing the example above for sending money to John, computing system 100 may use data retrieved from the messaging application and the banking application to generate new code that provides functionality for sending $20 to John by, for example, user 120 interacting with a single graphical component, such as a button.

In this way, the techniques described herein may also provide users a "shortcut" for performing tasks and accessing various application functionality. Furthermore, in some examples, computing system 100 may be configured to receive an indication of a natural language input based on, for example, a "touch and talk" feature, rather than by the user navigating through the one or more applications. More specifically, in some examples, computing system 100 may receive the indication of the natural language input from computing device 112 in response to at least one gesture detected at a location of an input device, such as a presence-sensitive display of computing device 112, e.g., a location that corresponds to a graphical user interface component used for causing computing system 100 to perform the techniques described herein. For example, in the example of the touch and talk feature, user 120 may hold down on one of widgets 118 with their finger, in which the particular widget 118 may be a widget or other graphical component (e.g., a button) designated for triggering the techniques attributed to computing system 100, and may be displayed on a home screen (e.g., GUI 117) of computing device 112. While holding down on the widget, user 120 may provide natural language input such as, "Send money to John, book Jane's appointment," in which holding down on the widget may be a gesture that causes a user interface component 102 (e.g., a microphone) of computing device 112 to capture the natural language input.

In some examples, the gesture may be provided mechanically (such as by pressing a button) or by gesture recognition/control (such as triple tapping on a screen). In some examples, the indication of a gesture may be an audible input, whereby the gesture is provided by user 120 via, for example, voice command. In some examples, the indication of the gesture is provided by user 120 by using gesture control, such as by providing the gestures described above (e.g., a hand-wave, a pinch, a clap, a pen stroke, etc.) or by tapping the screen in a certain manner (e.g., triple tapping the screen). Therefore, the techniques described herein may be executed by computing system 100 in response to an indication of a variety of gestures. While user 120 may be able to perform tasks themselves by interacting with one or more applications, computing system 100 may generate instructions for performing the tasks based on user 120 performing a simple gesture, such as holding down on GUI 117 and speaking their intent. In this way, users may not be required to navigate through applications to find their desired functionality or perform various tasks. That is, the techniques described herein may provide user 120 with a mechanism to "shortcut" the complexity of performing various actions for various tasks. That is, the techniques described herein may be used to generate a GUI and/or graphical components that display highly tailored information and provide functionality for various actions, which may be unavailable through other means directly. In this way, a GUI with an alternative graphical shortcut can be provided to the user, which can improve human-computer interaction.

Furthermore, in the example of FIG. 1, one or more of widgets 118 may be generated on GUI 117 at a first time, and then may be refreshed (e.g., based on a dynamic time interval determined by machine learning module 110) and/or deleted (e.g., based on a "useful until" date and/or time determined by machine learning module 110) at a later time. In some examples, one or more graphical elements (e.g., text, buttons, colors, etc.) included within a graphical component may be generated on GUI 117 at a first time, and then may be refreshed (e.g., based on a dynamic time interval determined by machine learning module 110) and/or deleted (e.g., based on a "useful until" date and/or time determined by machine learning module 110) at a later time.

In this respect, various aspects of the techniques described in this disclosure may facilitate better user experience with applications executing on user devices. Specifically, smaller, more organized, and customizable widgets that provide users access to functionality of one or more larger applications may reduce the amount of time and effort required by a user to access such functionality when trying to complete tasks. An improved human-computer interface may therefore be provided. The techniques described may also provide more assistance to users with disabilities when interacting with devices and applications through said improved interface. Furthermore, provided that the techniques described include generating new code based on user intent, users may be able to personalize the functionality of applications with which they interact without requiring a developer of the application to hard-code additional features or otherwise update the application.

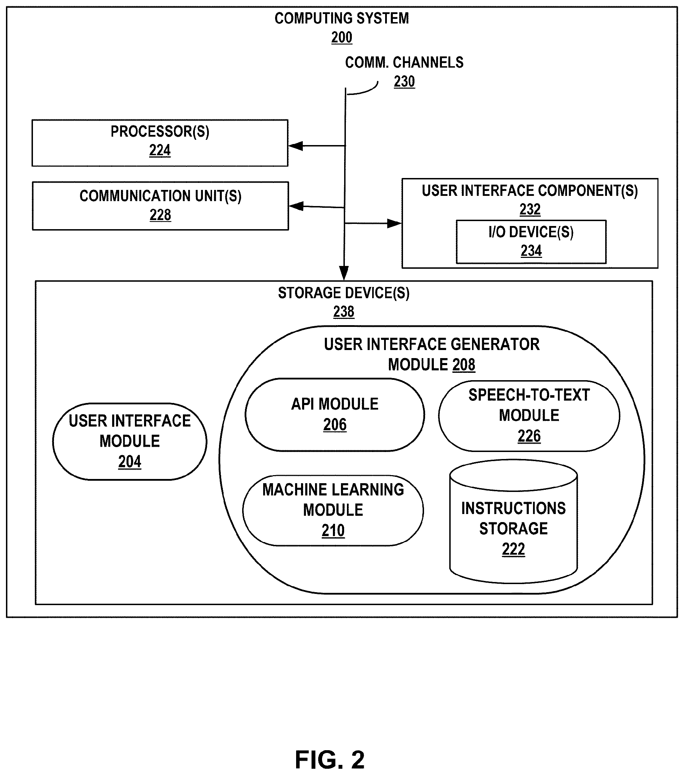

FIG. 2 is a block diagram illustrating another example computing system for applying a large language model to natural language input in order to generate custom graphical components that dynamically update based on a temporal parameter, in accordance with one or more techniques of this disclosure. As shown in the example of FIG. 2, computing system 200 includes processors 224, one or more communication channels 230, one or more user interface components (UIC) 232, one or more communication units 228, and one or more storage devices 238. Storage devices 238 of computing system 200 may include user interface module 204, and user interface generator module 208. As shown in the example of FIG. 2, user interface generator module 208 further includes API module 206, machine learning module 210, speech-to-text module 226, and instructions storage 222.

Some or all of the components and/or functionality attributed to computing system 200 may be implemented or performed by a computing device in communication with computing system 200. Computing system 200, user interface module 204, user interface generator module 208, API module 206, machine learning module 210, and user interface (UI) components 232 may be similar if not substantially similar to computing system 100, user interface module 104, user interface generator module 108, API module 106, machine learning module 110, and user interface (UI) components 102 of FIG. 1, respectively.

The one or more communication units 228 of computing system 200, for example, may communicate with external devices by transmitting and/or receiving data at computing system 200, such as to and from remote computer systems or computing devices. Example communication units 228 include a network interface card (e.g., such as an Ethernet card), an optical transceiver, a radio frequency transceiver, or any other type of device that can send and/or receive information. Other examples of communication units 228 may be devices configured to transmit and receive Ultrawideband^{®}, Bluetooth^{®}, GPS, 3G, 4G, and Wi-Fi^{®}, etc. that may be found in computing devices, such as mobile devices and the like.

As shown in the example of FIG. 2, communication channels 230 may interconnect each of the components as shown for inter-component communications (physically, communicatively, and/or operatively). In some examples, communication channels 230 may include a system bus, a network connection (e.g., to a wireless connection), one or more inter-process communication data structures, or any other components for communicating data between hardware and/or software locally or remotely.

One or more I/O devices 234 of computing system 200 may receive inputs and generate outputs. Examples of inputs are tactile, audio, kinetic, and optical input, to name only a few examples. Input devices of I/O devices 234, in one example, may include a touchscreen, a touchpad, a mouse, a keyboard, a voice responsive system, a video camera, buttons, a control pad, a microphone or any other type of device for detecting input from a human or machine. Output devices of I/O devices 234, may include, a sound card, a video graphics adapter card, a speaker, a display, or any other type of device for generating output to a human or machine.

User interface module 204, user interface generator module 208, API module 206, machine learning module 210, speech-to-text module 226, and instructions storage 222 (hereinafter "modules 204-226") may perform operations described herein using software, hardware, firmware, or a mixture of hardware, software, and firmware residing in and executing on computing system 200 or at one or more other computing devices (e.g., a cloud-based application - not shown). For example, some or all of modules 204-226 may be included in and executable on a local computing device, such as computing device 112 of FIG. 1. As such, the techniques described herein may all be implemented locally on a computing device.

Computing system 200 may execute one or more of modules 204-226, with one or more processors 224 or may execute any or part of one or more of modules 204-226 as or within a virtual machine executing on underlying hardware. One or more of modules 204-226 may be implemented in various ways, for example, as a downloadable or pre-installed application, remotely as a cloud application, or as part of the operating system of computing system 200. Other examples of computing system 200 that implement techniques of this disclosure may include additional components not shown in FIG. 2.

In the example of FIG. 2, one or more processors 224 may implement functionality and/or execute instructions within computing system 200. For example, one or more processors 224 may receive and execute instructions that provide the functionality of UIC 232, communication units 228, one or more storage devices 238 and an operating system to perform one or more operations as described herein. For example, one or more processors 224 may receive and execute instructions that provide the functionality of some or all of modules 204-226 to perform one or more operations and various functions described herein. The one or more processors 224 include a central processing unit (CPU). Examples of CPUs include, but are not limited to, a digital signal processor (DSP), a general-purpose microprocessor, a tensor processing unit (TPU); a neural processing unit (NPU); a neural processing engine; a core of a CPU, VPU, GPU, TPU, NPU or another processing device, an application specific integrated circuit (ASIC), a field programmable logic array (FPGA), or other equivalent integrated or discrete logic circuitry, or other equivalent integrated or discrete logic circuitry.

One or more storage devices 238 within computing system 200 may store information, such as information retrieved from a user computing device, or other data discussed herein, for processing during the operation of computing system 200. In some examples, one or more storage devices of storage devices 238 may be a volatile or temporary memory. Examples of volatile memories include random access memories (RAM), dynamic random-access memories (DRAM), static random-access memories (SRAM), and other forms of volatile memories known in the art. Storage devices 238, in some examples, may also include one or more computer-readable storage media. Storage devices 238 may be configured to store larger amounts of information for longer terms in non-volatile memory than volatile memory. Examples of non-volatile memories include magnetic hard disks, optical discs, floppy discs, flash memories, or forms of electrically programmable memories (EPROM) or electrically erasable and programmable (EEPROM) memories. Storage devices 238 may store program instructions and/or data associated with the modules 204-226 of FIG. 2.

In general, with explicit consent from a user, computing system 200 may retrieve, using API module 206, information (e.g., API response data) associated with a plurality of functions included in one or more applications executing at a computing device. UI module 204 may receive an indication of a natural language input associated with the plurality of functions. For example, the plurality of functions may include some or all of the functions that are predefined, e.g., by application developers, in the one or more applications executing at the computing device. In some examples, computing system 200 may retrieve data, e.g., user data, and/or context information from the one or more applications executing at the computing device, and/or the computing device itself. For example, the context information may include, but is not limited to, device location data, device information, network information, connectivity information, application usage data, environmental data, user preference data, battery status, sensor data, application permissions, calendar events, notification data, etc. The indication of the natural language input may be associated with one or more functions from the plurality of functions. For example, the natural language input may include an utterance such as, "Call electrician," which may be associated with functionality for making a phone call, which may already be predefined in a phone application included in a smartphone.

In some examples, the indication of the natural language input may be received by UI module 204 from the computing device in response to at least one gesture detected at a location of an input device, e.g., a presence-sensitive display of the computing device. In other words, a user may use a "touch and talk" feature on the computing device, in which the indication of the natural language input is captured by the computing device and sent to UI module 204. UI module 204 may further interpret the indication or other inputs detected at the computing device. UI module 204 may relay information about the inputs detected at the computing device to one or more associated platforms, operating systems, applications, and/or services executing at the computing device to cause the computing device to perform a function. For example, if UI module 204 is unable to interpret the indication or other inputs, UI module 204 may relay information to the computing device in which the computing device may request the user to repeat or clarify the indication or other inputs. In some examples, UI module 204 may determine whether the indication of a natural language input is associated with one or more functions from the plurality of functions included in the one or more applications executing at the computing device. In other words, UI module 204 may determine whether the indication and/or other inputs are associated with the capabilities and/or functionality of the applications, such that the user's desired functionality for completing tasks can be generated. For example, if UI module 204 receives user input requesting to "Send a message to Joe M.," but determines that the user's contacts application does not include contact information for a Joe M., UI module 204 may determine that functionality for performing the task of sending a message to Joe M. cannot be generated by computing system 200. UI module 204 may then relay information to the computing device indicating this error, in which the computing device may further relay this error to the user.

UI module 204 may also receive information and instructions from one or more associated platforms, operating systems, applications, and/or services executing at the computing device (e.g., user interface generator module 208) for generating a file comprising the set of instructions. In general, the set of instructions may provide at least one function for performing a respective task from one or more tasks identified in the user input. In some examples, UI module 204 may act as an intermediary between the one or more associated platforms, operating systems, applications, and/or services executing at the computing device and various output devices of the computing device (e.g., speakers, LED indicators, vibrators, etc.) to produce output (e.g., graphical, audible, tactile, etc.) with the computing device.

In some examples, user interface generator module 208 may be implemented on a computing device in various ways. For example, user interface generator module 208 may be implemented as a downloadable or pre-installed application or "app." In another example, user interface generator module 208 may be implemented as part of an operating system of a computing device.

Instructions storage 222 may be a storage repository for the information associated with the plurality of functions included in the one or more applications executing at the computing device that are retrieved by API module 206. In general, the information associated with the plurality of functions may include API response data, in which the API response data is associated with one or more capabilities and/or functionality of an application that are predefined at compile time. Instructions storage 222 may also store, with explicit user consent, context data and/or other data (e.g., user data) retrieved from computing device 112 by API module 106.

Information may be stored in instructions storage 222 for use by other modules of user interface generator module 208, such as machine learning module 210. In some examples, instructions storage 222 may operate, at least in part, as a cache for instructions retrieved from a computing device (e.g., using one or more communication units 228) or other computing devices. In general, instructions storage 222 may be configured as a database, flat file, table, or other data structure stored within storage device 238. In some examples, instructions storage 222 is shared between various modules executing at computing system 200 (e.g., between one or more of modules 204-226 or other modules not shown in FIG. 2). In other examples, a different data repository is configured for a module executing at computing system 200 that requires a data repository. Each data repository may be configured and managed by different modules and may store data in a different manner. In some examples, computing system 200 may receive and store information from a computing device over a specified period of time.

In general, user interface generator module 208 may apply machine learning module 210 to natural language input in order to dynamically generate custom graphical components that dynamically update based on a temporal parameter, e.g., a refresh rate, a "useful until" date, a time duration, a start time, an end time, a day of the week, month, year, etc. In some examples, UI generator module 208 may generate, retrieve, and/or store one or more templates for one or more user interface layouts. For example, based on at least a portion of the indication of the natural language input, machine learning module 210 may determine a specific prompt and access a variety of data sources (e.g., the web) for generating and/or retrieving store one or more user interface layouts. In general, UI generator module 208 may generate a list of user interface layouts. Each user interface layout within that list may have its own custom color profile, refresh interval, and/or useful-until date. In some examples, machine learning module 210 may determine a priority score for each user interface layout within the list, e.g., the order of layouts within the list may be prioritized.

In some examples, the indication of the natural language input may indicate a user's request for a particular layout. In some examples, based on the user's request, UI generator module 208 may generate the list of user interface layouts, and then may determine a user interface layout with a highest score. In these examples, UI generator module 208 may output instructions to use the user interface layout with the highest score. In some examples, UI generator module 208 may further output information necessary to fill the user interface layout. For example, UI generator module 208 may output instructions to use a "text layout" that requires the use of a "title" and an optional "subtitle." In some examples, UI generator module 208 may output instructions to present, e.g., to a user via UI components 232, a prompt for selecting a user interface layout from the list of user interface layouts, or a prompt for selecting a user interface layout from a few user interface layouts filtered from the list of user interface layouts based on their respective priority scores.

In some examples, UI generator module 208 may generate a custom color profile for a graphical component if there is a strong color association with the information presented by the graphical component. For example, if information is strongly associated with a single color, machine learning module 210 may output instructions for presenting that color along with the information. In some examples, the instructions may include instructions for displaying a dynamic color scheme, tokens, and/other graphical elements for visual presentation. As an example, if a user asks a question such as, "Who is batman?", the instructions may include instructions for generating a graphical component that may be strongly associated with the color black.

In some examples, UI generator module 208 may provide layout variations depending on rendered size. For instance, machine learning module 210 may generate instructions that specify different layouts depending on size constraints set by the user and/or other retrieved information. For example, in general, a home screen widget can be resized. However, not all information can be displayed at smaller sizes (e.g., font sizes), and more information may be ideal to show at larger sizes. Likewise, the layout itself may have embedded rules (which may be independent of output generated by machine learning module 210) to hide, show, or truncate information. As such, UI generator module 208 may generate instructions for generating graphical components that are optimized for display and/or are in accordance with predefined rules for display.

In some examples, machine learning module 210 may determine the input provided by the user (e.g., a user's request) to be too ambiguous. If the user's request is too ambiguous and/or doesn't contain enough information for machine learning module 210 to generate a useful response, machine learning module 210 may generate a follow-up question for the user, which may be output for display to the user. The user may provide additional input to answer the follow-up question, e.g., by selecting a presented option, providing additional natural language input, etc. In some examples, even after receiving a response to a first follow-up question, machine learning module 210 may generate additional follow-up questions for the user, which may be output for display to the user. The responses to these questions may then be fed back to a prompt for machine learning module 210 as part of the user's request. As such, in general, UI generator module 208 may use a feedback loop to receive additional information from a user that helps UI generator module 208 generate instructions for relevant graphical components that better fulfill user intent.

Furthermore, in some examples, users may refine and/or edit output generated by computing system 200. For example, after generation of a graphical component, if the user is displeased with the generated graphical component, the user may provide follow-up clarification. Then, the prompt for machine learning module 210 may be updated to include the follow-up clarification, and UI generator module 208 may update the instructions for generating the graphical component to update the graphical component. For example, if the user's input was a natural language request such as "Find me dinner," machine learning module 210 may generate follow-up questions such as, "What kind of food would you like?" and "How close by?" The user may then provide an additional natural language input such as, "Thai within a 10-minute drive". In some examples, a user may refine output by requesting the system to add attributes to an existing list, expand and/or reduce a time or date range of a list, replacing the content of a graphical component after an expiration date, etc.

As such, in general, UI generator module 208 may use a "refinement process" to refine output and better fulfill user intents. In addition to generating instructions for generating custom graphical components, UI generator module 208 may generate instructions for prompting a user to answer follow-up questions, refine their query, etc. In some examples, the refinement process may generate various new pieces of information and functionality and may lead to changes in the presentation of the generated graphical components. In general, users may have the ability to undo refinement steps if they wish. That is, a user may request that a graphical component be reverted back to an earlier version of itself, etc. In some examples, a user may provide an input such as "revert this widget," "actually, never mind," or other colloquial language to update and/or revert a generated graphical component. In some examples, a graphical element, such as a reset button, may be displayed, which a user may interact with to return to a previous point.

In some examples, a specific presentation of one or more generated graphical components may be saved by a user. For example, in some examples, the instructions may include instructions for presenting a suggested graphical component or widget, and a user may decide whether to save the end visual presentation as a widget to their home screen, lock screen, or other GUI. For example, the user may interact with the suggested graphical component to add it to a particular screen. Once the user has saved or added the graphical component, the graphical component may be updated and/or deleted based on a temporal parameter, the refinement process, etc.

In accordance with the techniques of this disclosure, machine learning module 210 may determine a temporal parameter for each graphical component and/or graphical element included in a graphical component. In general, a temporal parameter may be a refresh time interval (e.g., a time interval in which a prompt for outputting instructions for generating a respective graphical component is rerun by machine learning module 210 to update the instructions) or a "useful until date" (e.g., a date and/or time at which a graphical component and/or element should be deleted). The temporal parameter may be a time duration, e.g., 1 day, 1 week, 1 month, 1 year, etc., a start time and an end time, an end time, a day of the week, month, year, etc. As such, each graphical component and/or graphical element included in a graphical component may be updated and/or deleted over time based on its respective temporal parameter.

For example, if the user asks a question about weather conditions, machine learning module 210 may output a refresh time interval that is 10 minutes, meaning the prompt will be rerun every 10 minutes to keep the weather information displayed by the graphical component up to date. In some examples, each time the prompt reruns to refresh content of a graphical component, the refresh interval may change. Furthermore, in some examples, some graphical components, graphical elements, and/or functionality may not need to be refreshed.

In some examples, with explicit user permission, the user's location may be used when a user provides input. However, at the time of refresh, the user's current location may be different from the user's location when they initially provided their request. As such, in some examples, the prompt may be updated to indicate whether the current or original location should be used when generating updated instructions for the graphical component (e.g., "refreshing" the graphical component).

In some examples, UI generator module 208 may further generate instructions for keeping a visual presentation as stable as possible when a graphical component is being refreshed. That is, after refreshing the content, the visual presentation may change only as much as necessary. For example, if a text layout was originally used, a text layout with the same title and any applied custom color profile may be reused in the refresh. In some other examples, though, visual changes may be purposeful. Thus, in general, a variation of the original prompt may be used by machine learning module 210 to generate instructions for refreshing the content on the refresh interval. In some examples, a portion of the original output (e.g., the user interface layout type, such as "text layout") may be provided along with a modified prompt to machine learning module 210.

In some examples, UI generator module 208 may find or associate relevant graphics for the generated graphical components. For example, the one or more graphical components may be better represented with or along with various graphical representations. The selected user interface layout, for instance, may include slots for various graphical elements, and machine learning module 210 may determine whether to insert any relevant graphical elements into those slots. For example, a graphical element may be, but is not limited to, an emoji, an icon, a picture, or a graph. In general, any text displayed by a graphical component can include an emoji.

In some examples, UI generator module 208 may store one or more sets of predetermined graphical icons and their descriptions for various graphical components and/or types of graphical components. For instance, UI generator module 208 may store a set of predetermined graphical icons for graphical components that display information pertaining to the weather. In this example, the set of predetermined graphical icons may include, for example, icons for sunny and rainy weather. Then, the final visual presentation, e.g., the generated graphical component, may include this iconography if it is relevant to the current weather information being displayed. In some examples, a large set of icons (e.g., a full material icon set) and their descriptions may be provided to machine learning module 210, and the displayed layout and/or generated graphical components may include any icons determined to be relevant.

In some examples, machine learning module 210 determines the "useful until" date, e.g., a length of time until the information and/or functionality provided by a generated graphical component will no longer be useful to the user. For example, if the user asked, "What do I need for the San Francisco marathon?", the useful-until date could be the day after the race takes place, as the graphical component that provides information for this question is no longer relevant. In some examples, with explicit user consent, a distance traversed by a user may be used for refreshing and/or deleting generated graphical components. In general, based on the "useful until" date, a generated graphical component, a graphical element, and/or a user interface layout may be automatically removed or deleted from a GUI. In some examples, though, a generated graphical component, a graphical element, and/or a user interface layout may not have an expiration or "useful until" date, and thus may only be deleted by a user manually.

In the example of FIG. 2, user interface generator module 208 may receive, from UI module 204, the indication of a natural language input, which may be an audio or text input from a user operating a computing device. In examples where the user input is an audio input (e.g., comprising spoken language), speech-to-text module 226 may convert the input into a computer-readable format. Speech-to-text module 226 may implement an Automatic Speech Recognition (ASR) system to convert an audio input (e.g., a digital audio signal) into written text. In some examples, speech-to-text module 226 may preprocess the audio input to enhance quality and remove noise by normalizing the audio volume and filtering out any background noise. Speech-to-text module 226 may then transform the audio input into a more suitable format and extract features such as Mel-frequency cepstral coefficients (MFCCs), which capture information about the frequency content of the audio signal over short time intervals. In some examples, speech-to-text module 226 may perform acoustic modeling (e.g., with Hidden Markov Models (HMMs)), which may involve training a statistical model that maps the extracted audio features to phonemes. The acoustic model may learn to associate specific audio features with phonemes while taking into account the variations in pronunciation, accents, and speaking styles. In some examples, speech-to-text module 226 may further implement language modeling (e.g., deep learning techniques, such as recurrent neural networks (RNNs) and transformers) to capture and predict a sequence of words or phrases while considering the context in which the words are spoken (e.g., speech-to-text module 226 may use context information received by UI module 204). Speech-to-text module 226 may further use the trained acoustic and language models to decode the audio input and generate a transcription or sequence of words that best match the observed audio features. Speech-to-text module 226 may further implement post-processing techniques (e.g., grammar checks, contextual analysis, spell correction, etc.) to refine the transcription and improve readability and accuracy. Speech-to-text module 226 may then output the transcribed text that represents the audio input to machine learning module 210 for further processing and analysis.

In general, machine learning module 210 may be configured to interpret both text and audio input received by UI module 204, such as to identify one or more tasks. In some examples, machine learning module 210 may be configured to infer any indication of a natural language input. In other words, machine learning module 210 may infer capabilities from user intents. In some examples, machine learning module 210 may search capabilities. In some examples, machine learning module 210 may convert the audio or text input received by UI module 204, the transcribed text output from speech-to-text module 226, and/or any information stored in instructions storage 222 into structured text. For example, machine learning module 210 may convert any input or information to an eXtensible Markup Language (XML), or other structured text types, such as, but not limited to, HTML, JSON, CSV, INI Files, etc. In this way, the information and input received by user interface generator module 208 can be provided to ML module 210 in a standardized format. Furthermore, in some examples, machine learning module 210 may determine the type of information to include in the structured text representation. More specifically, machine learning module 210 may analyze various application functionality, capabilities, and attributes included in the information stored in instructions storage 222, such as content descriptions, roles, states, actions, and/or other relevant properties of user interface elements, the contextual information associated with the user input, the audio or text input received by UI module 204, and/or the transcribed text output from speech-to-text module 226.

In some examples, as discussed above, the received indication of the natural language input may be preprocessed. In some examples, the information stored in instructions storage 222 may be preprocessed. Preprocessing techniques may include extracting one or more additional features from raw data. For example, feature extraction techniques may be applied to the user input or retrieved instructions to generate one or more new, additional features.

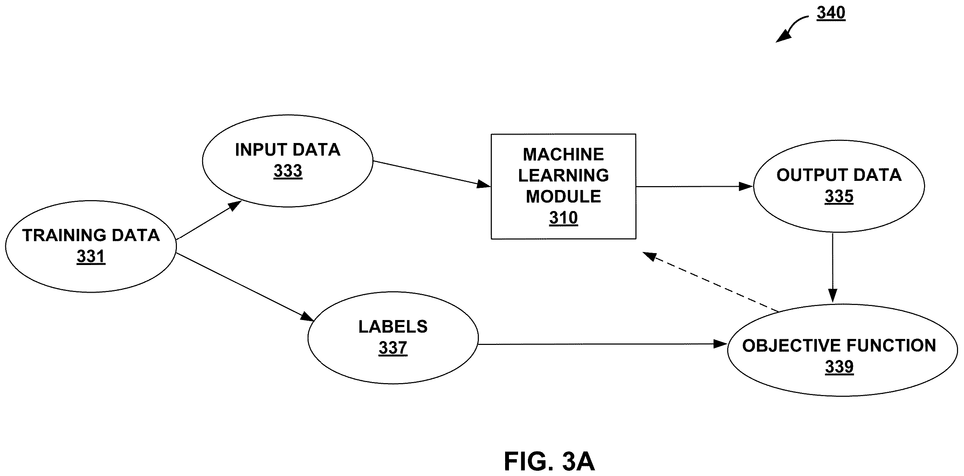

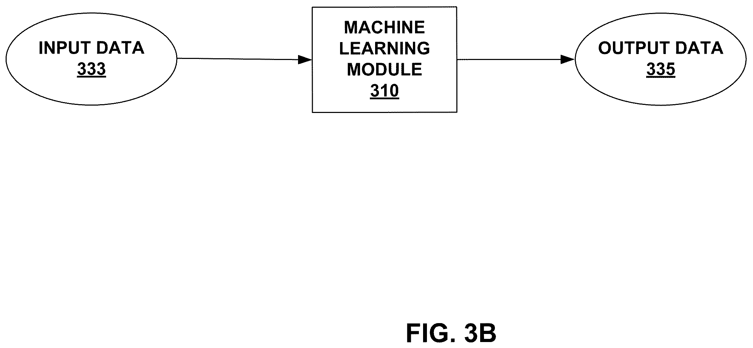

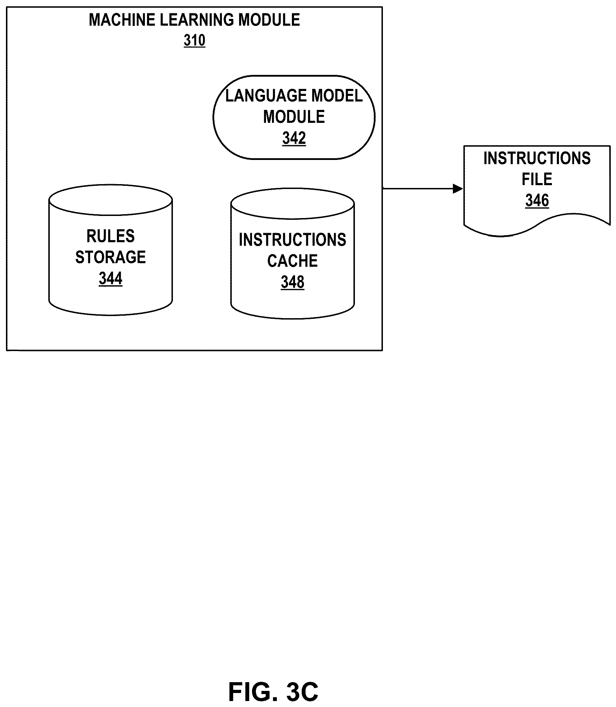

In general, machine learning module 210 may employ a large language model (LLM) that can interpret the indication of a natural language input and generate a set of instructions for generating at least one graphical component that fulfills identified user intents. Furthermore, machine learning module 210 may use information retrieved via API module 206 to determine at least one temporal parameter for the at least one graphical component. As described further below with respect to FIGS. 3A, 3B, and 3C, in some examples, machine learning module 210 may apply a language model to the indication of the natural language input to identify one or more user intents. In some examples, machine learning module 210 may implement other machine-learned models that may be used in place of or in conjunction with LLM model that is described with respect to FIGS. 3A, 3B, and 3C. Machine learning module 210 may perform various types of natural language processing (NLP) based on the indication of the natural language input. The indication of the natural language input, retrieved application information, context information, and/or other data (e.g., user data) received by computing system 200 may be referred to herein as "input data". Thus, machine learning module 210 may apply one or more machine learning techniques to the input data.

FIG. 3A is a conceptual diagram illustrating an example training process for a machine learning module, in accordance with one or more techniques of this disclosure. In some examples, computing device 112 of FIG. 1 may store and implement machine learning module 310 locally (i.e., on-device). Thus, in some examples, machine learning module 310 can be stored at and/or implemented locally by an embedded device or a user computing device such as a mobile device. Output data obtained through local implementation of machine learning module 310 at the embedded device or the user computing device can be used to improve performance of the embedded device or the user computing device (e.g., an application implemented by the embedded device or the user computing device). Machine learning module 310 described herein can be trained at a training computing system, and then provided for storage and/or implementation at one or more computing devices, such as computing device 112 of FIG. 1. In some examples, training process 340 executes locally at computing system 100 of FIG. 1. However in some examples, training process 340 can be included in or separate from any computing system that implements machine learning module 310.

In general, machine learning module 310 may be or include one or more inference models, i.e., one or more trained machine learning models that can be used to make predictions based on new, unseen data. Machine learning module 310 may "infer" conclusions or outputs, which may be predictions, classifications, recommendations, or other types of decision-making. Machine learning module 310 may be trained according to one or more of various different training types or techniques. For example, in some examples, machine learning module 310 may be trained by training process 340 of FIG. 3A.

As further shown in the example of FIG. 3A, in some examples, machine learning module 310 may be trained on training data 331 that may include input data 333 that has labels 337. The training process shown in FIG. 3A is one example training process; other training processes may be used as well. In general, during training process 340, machine learning module 310 may learn patterns from training data 331, and training process 340 may optimize parameters for machine learning module 310 to minimize prediction errors.

Training data 331 can include, upon user permission for use of such data for training, anonymized usage logs of sharing flows, e.g., content items that were shared together, bundled content pieces already identified as belonging together, e.g., from entities in a knowledge graph, etc. In some examples, training data 331 can include examples of input data 333 that have been assigned labels 337 that correspond to output data 335.

In some examples, machine learning module 310 can be trained by optimizing an objective function, such as objective function 339. For example, in some examples, objective function 339 may be or include a loss function that compares (e.g., determines a difference between) output data generated by the model from the training data and labels (e.g., ground-truth labels) associated with the training data. For example, the loss function can evaluate a sum or mean of squared differences between output data 335 and the labels. In some examples, objective function 339 may be or include a cost function that describes a cost of a certain outcome or output data. Other examples of objective function 339 can include margin-based techniques such as, for example, triplet loss or maximum-margin training.

One or more of various optimization techniques can be performed to optimize objective function 339. For example, the optimization technique(s) can minimize or maximize objective function 339. Example optimization techniques include Hessian-based techniques and gradient-based techniques, such as, for example, coordinate descent; gradient descent (e.g., stochastic gradient descent); subgradient methods; etc. Other optimization techniques include black box optimization techniques and heuristics.

In some examples, backward propagation of errors can be used in conjunction with an optimization technique (e.g., gradient based techniques) to train machine learning module 310 (e.g., when a machine-learned model is a multi-layer model such as an artificial neural network). For example, an iterative cycle of propagation and model parameter (e.g., weights) update can be performed to train machine learning module 310. Example backpropagation techniques include truncated backpropagation through time, Levenberg- Marquardt backpropagation, etc.

In some examples, machine learning module 310 described herein can be trained using unsupervised learning techniques. Unsupervised learning can include inferring a function to describe hidden structure from unlabeled data. For example, a classification or categorization may not be included in the data. Unsupervised learning techniques can be used to produce machine-learned models capable of performing clustering, anomaly detection, learning latent variable models, or other tasks.

Machine learning module 310 can be trained using semi-supervised techniques which combine aspects of supervised learning and unsupervised learning. Machine learning module 310 can be trained or otherwise generated through evolutionary techniques or genetic algorithms. In some examples, machine learning module 310 described herein can be trained using reinforcement learning. In reinforcement learning, an agent (e.g., model) can take actions in an environment and learn to maximize rewards and/or minimize penalties that result from such actions. Reinforcement learning can differ from the supervised learning problem in that correct input/output pairs are not presented, nor sub-optimal actions explicitly corrected.

In some examples, one or more generalization techniques can be performed during training to improve the generalization of machine learning module 310. Generalization techniques can help reduce overfitting of machine learning module 310 to the training data. Example generalization techniques include dropout techniques; weight decay techniques; batch normalization; early stopping; subset selection; stepwise selection; etc.

In some examples, machine learning module 310 described herein can include or otherwise be impacted by a number of hyperparameters, such as, for example, learning rate, number of layers, number of nodes in each layer, number of leaves in a tree, number of clusters; etc. Hyperparameters can affect model performance. Hyperparameters can be hand selected or can be automatically selected through application of techniques such as, for example, grid search; black box optimization techniques (e.g., Bayesian optimization, random search, etc.); gradient-based optimization; etc. Example techniques and/or tools for performing automatic hyperparameter optimization include Hyperopt; Auto-WEKA; Spearmint; Metric Optimization Engine (MOE); etc.

In some examples, various techniques can be used to optimize and/or adapt the learning rate when the model is trained. Example techniques and/or tools for performing learning rate optimization or adaptation include Adagrad; Adaptive Moment Estimation (ADAM); Adadelta; RMSprop; etc.

In some examples, transfer learning techniques can be used to provide an initial model from which to begin training of machine learning module 310 described herein. In some examples, transfer learning involves reusing a model and its model parameters obtained while solving one problem and applying it to a different but related problem. Models trained on very large data sets may be retrained or fine-tuned on additional data. Often, all model designs and their parameters on a source model are copied except output layer(s). The output layers(s) are often called the head, and other layers are often called the base. The source parameters may be considered to contain the knowledge learned from the source dataset and this knowledge may also be applicable to a target dataset. Fine-tuning may include updating the head parameters with the body parameters being fixed or updated in a later step.

In some examples, machine learning module 310 may be trained in an offline fashion or an online fashion. In offline training (also known as batch learning), machine learning module 310 is trained on the entirety of a static set of training data. In online learning, machine learning module 310 is continuously trained (or re-trained) as new training data becomes available (e.g., while the model is used to perform inference).

In some examples, training process 340 may involve centralized training of machine learning module 310 (e.g., based on a centrally stored dataset). In other implementations, decentralized training techniques such as distributed training, federated learning, or the like can be used to train, update, or personalize machine learning module 310.

Machine learning module 310 described herein can be trained according to one or more of various different training types or techniques. For example, in some examples, machine learning module 310 can be trained by training process 340 using supervised learning, in which machine learning module 310 is trained on a training dataset that includes instances or examples that have labels. The labels can be manually applied by experts, generated through crowd-sourcing, or provided by other techniques (e.g., by physics-based or complex mathematical models). In some examples, if the user has provided consent, the training examples can be provided by the user computing device. In some examples, this process can be referred to as personalizing the model.

In some examples, machine learning module 310 includes a language model that may be trained (e.g., pre-trained, fine-tuned, etc.) by training process 340. For example, training process 340 may pre-train a language model on a large and diverse corpus of text. As such, in some examples, training data 331 may include a dataset that covers a wide range of topics and domains to ensure machine learning module 310 learns diverse linguistic patterns and contextual relationships. Training process 340 may train a language model to optimize objective function 339. Objective function 339 may be or include a loss function, such as cross-entropy loss, that compares (e.g., determines a difference between) output data generated by the model from training data 331 and labels 337 (e.g., ground-truth labels) associated with training data 331. For example, objective function 339 for a language model may be to correctly predict the next word in a sequence of words or correctly fill in missing words as much as possible.

In some examples, training process 340 may use techniques such low-rank adaptation (LoRA) to train or fine-tune language models (LLMs) implemented by machine learning module 310. In general, LoRA may reduce the number of trainable parameters by freezing pre-trained weights of an LLM and injecting small, trainable low-rank matrices that adapt the model for specific tasks. LoRa may be useful when a model needs to be adapted to multiple tasks with limited task-specific data. That is, training process 340 may use LoRA for task-specific fine-tuning. In some examples, training process 340 may use techniques such as retrieval-augmented generation (RAG), which is a hybrid framework that combines information retrieval with text generation. RAG may be used to fine-tune a generative model implemented by machine learning module 310 by retrieving relevant information from an external database or dataset (e.g., a large and diverse corpus of text) and using that information to generate output that is more accurate and informative. RAG may be useful for generating more factually accurate and contextually relevant summaries and responses to questions.

In some examples, training process 340 may continuously or periodically train a language model included in machine learning module 310. In some examples, training process 340 may fine-tune a language model by using feedback in the training process. For example, UI component 202 of FIG. 2 may receive a user input via a computing device that selects feedback (e.g., thumbs up, thumbs down, etc.) relating to the generated application functionality and associated GUIs that are presented to the user on the computing device. In some examples, the feedback may indicate whether the generated application functionality and associated GUIs are accurate or inaccurate, correct or incorrect, high quality or low quality, etc. UI module 204 may receive this feedback and may send it to user interface generator module 208. User interface generator module 208 may transmit the feedback to machine learning module 310 (specifically to training process 340), in which training process 340 uses the feedback for training. For example, training process 340 may convert the feedback into labeled data for supervised training. Additionally or alternatively, training process 340 may fine-tune a language model by monitoring the relationship between the performance of the language model and user feedback, and iterate the fine-tuning process as necessary (e.g., to receive more positive user feedback and less negative user feedback). In this way, the techniques of this disclosure may establish a feedback loop that continuously improves the quality of output data 335 (e.g., an instructions file) of a language model.

FIG. 3B is a conceptual diagram illustrating an example trained machine learning module, in accordance with one or more techniques of this disclosure. In some examples, computing device 112 of FIG. 1 may store and implement machine learning module 310 locally (i.e., on-device). Thus, in some examples, machine learning module 310 can be stored at and/or implemented locally by an embedded device or a user computing device such as a mobile device. Output data obtained through local implementation of machine learning module 310 at the embedded device or the user computing device can be used to improve performance of the embedded device or the user computing device (e.g., an application implemented by the embedded device or the user computing device). Machine learning module 310 of FIG. 3B may be trained at a computing system, such as computing system 100 of FIG. 1, and then provided for storage and/or implementation at one or more computing devices, such as computing device 112 of FIG. 1. In some examples, machine learning module 310 executes locally at computing system 100 of FIG. 1. In some examples, computing system 100 may perform machine learning as a service.

As illustrated in FIG. 3B, in some examples, machine learning module 310 is trained (e.g., via training process 340 of FIG. 3A) to receive input data 333, which may be of one or more types and, in response, provide output data 335, which may be of one or more types. Thus, FIG. 3B illustrates machine learning module 310 performing inference, in which machine learning module 310 may use learned patterns to make predictions or decisions on new data, e.g., input data 333. Machine learning module 310 may include one or more machine-learned models trained by training process 340 of FIG. 3A.

Input data 333 may include one or more features that are associated with an instance or an example. In some examples, the one or more features associated with the instance or example can be organized into a feature vector. In some examples, output data 335 can include one or more predictions. Predictions can also be referred to as inferences. Thus, given features associated with a particular instance, machine learning module 310 can output a prediction for such instance based on the features.

Machine learning module 310 can be or include one or more of various different types of machine-learned models. In particular, in some examples, machine learning module 310 may perform NLP tasks. Machine learning module 310 may summarize, translate, or organize input data 333. Machine learning module 310 may use recurrent neural networks (RNNs) and/or transformer models (self-attention models). Example models may include, but are not limited to, GPT-3, BERT, Gemini (e.g., Gemini Ultra, Gemini Pro, Gemini Flash, Gemini Nano), Android AICore, and T5. In some examples, machine learning module 310 may perform classification, summarization, name generation, regression, clustering, anomaly detection, recommendation generation, and/or other tasks.

In some examples, machine learning module 310 can perform various types of classification based on input data 333. For example, machine learning module 310 can perform binary classification or multiclass classification. In binary classification, output data 335 can include a classification of input data 333 into one of two different classes. In multiclass classification, output data 335 can include a classification of input data 333 into one (or more) of more than two classes. The classifications can be single label or multi-label. Machine learning module 310 may perform discrete categorical classification in which input data 333 is simply classified into one or more classes or categories.

In some examples, machine learning module 310 can perform classification in which machine learning module 310 provides, for each of one or more classes, a numerical value descriptive of a degree to which it is believed that input data 333 should be classified into the corresponding class. In some instances, the numerical values provided by machine learning module 310 can be referred to as "confidence scores" that are indicative of a respective confidence associated with classification of the input into the respective class. In some examples, the confidence scores can be compared to one or more thresholds to render a discrete categorical prediction. In some examples, only a certain number of classes (e.g., one) with the relatively largest confidence scores can be selected to render a discrete categorical prediction.

Machine learning module 310 may output a probabilistic classification. For example, machine learning module 310 may predict, given a sample input, a probability distribution over a set of classes. Thus, rather than outputting only the most likely class to which the sample input should belong, machine learning module 310 can output, for each class, a probability that the sample input belongs to such class. In some examples, the probability distribution over all possible classes can sum to one. In some examples, a Softmax function, or other type of function or layer can be used to squash a set of real values respectively associated with the possible classes to a set of real values in the range (0, 1) that sum to one.

In some examples, the probabilities provided by the probability distribution can be compared to one or more thresholds to render a discrete categorical prediction. In some examples, only a certain number of classes (e.g., one) with the relatively largest predicted probability can be selected to render a discrete categorical prediction.

In cases in which machine learning module 310 performs classification, machine learning module 310 may be trained using supervised learning techniques. For example, machine learning module 310 may be trained on a training dataset that includes training examples labeled as belonging (or not belonging) to one or more classes.

In some examples, machine learning module 310 can perform regression to provide output data in the form of a continuous numeric value. The continuous numeric value can correspond to any number of different metrics or numeric representations, including, for example, currency values, scores, or other numeric representations. As examples, machine learning module 310 can perform linear regression, polynomial regression, or nonlinear regression. As examples, machine learning module 310 can perform simple regression or multiple regression. As described above, in some examples, a Softmax function or other function or layer can be used to squash a set of real values respectively associated with two or more possible classes to a set of real values in the range (0, 1) that sum to one.

Machine learning module 310 may perform various types of clustering. For example, machine learning module 310 can identify one or more previously-defined clusters to which input data 333 most likely corresponds. Machine learning module 310 may identify one or more clusters within input data 333. That is, in instances in which input data 333 includes multiple objects, documents, or other entities, machine learning module 310 can sort the multiple entities included in input data 333 into a number of clusters. In some examples in which machine learning module 310 performs clustering, machine learning module 310 can be trained using unsupervised learning techniques.

Machine learning module 310 may perform anomaly detection or outlier detection. For example, machine learning module 310 can identify input data that does not conform to an expected pattern or other characteristic (e.g., as previously observed from previous input data). As examples, the anomaly detection can be used for fraud detection or system failure detection.

In some examples, machine learning module 310 can provide output data in the form of one or more recommendations. For example, machine learning module 310 can be included in a recommendation system or engine. As an example, given input data that describes previous outcomes for certain entities (e.g., a score, ranking, or rating indicative of an amount of success or enjoyment), machine learning module 310 can output a suggestion or recommendation of one or more additional entities that, based on the previous outcomes, are expected to have a desired outcome (e.g., elicit a score, ranking, or rating indicative of success or enjoyment). As one example, given input data descriptive of a context of a computing device, such as computing device 112 of FIG. 1, a recommendation system can output a suggestion or recommendation of an application that the user might enjoy or wish to download to computing device 112.

Machine learning module 310 may, in some cases, act as an agent within an environment. For example, machine learning module 310 can be trained using reinforcement learning, which will be discussed in further detail below.

In some examples, machine learning module 310 can be a parametric model while, in other implementations, machine learning module 310 can be a non-parametric model. In some examples, machine learning module 310 can be a linear model while, in other implementations, machine learning module 310 can be a non-linear model.

As described above, machine learning module 310 can be or include one or more of various different types of machine-learned models. Examples of such different types of machine-learned models are provided below for illustration. One or more of the example models described below can be used (e.g., combined) to provide output data 335 in response to input data 333. Additional models beyond the example models provided below can be used as well.

In some examples, machine learning module 310 can be or include one or more classifier models such as, for example, linear classification models; quadratic classification models; etc. Machine learning module 310 may be or include one or more regression models such as, for example, simple linear regression models; multiple linear regression models; logistic regression models; stepwise regression models; multivariate adaptive regression splines; locally estimated scatterplot smoothing models; etc.

In some examples, machine learning module 310 can be or include one or more decision tree-based models such as, for example, classification and/or regression trees; iterative dichotomiser 3 decision trees; C4.5 decision trees; chi-squared automatic interaction detection decision trees; decision stumps; conditional decision trees; etc.

Machine learning module 310 may be or include one or more kernel machines. In some examples, machine learning module 310 can be or include one or more support vector machines. Machine learning module 310 may be or include one or more instance-based learning models such as, for example, learning vector quantization models; self- organizing map models; locally weighted learning models; etc. In some examples, machine learning module 310 can be or include one or more nearest neighbor models such as, for example, k-nearest neighbor classifications models; k- nearest neighbors regression models; etc. Machine learning module 310 can be or include one or more Bayesian models such as, for example, naïve Bayes models; Gaussian naïve Bayes models; multinomial naive Bayes models; averaged one-dependence estimators; Bayesian networks; Bayesian belief networks; hidden Markov models; etc.

Machine learning module 310 may be or include one or more sequence processing models, e.g., models configured to ingest, generate, or otherwise reason over sequences of information. Example sequence processing models include, but are not limited to, sequence processing models that can process text data (e.g., large language models, PaLM 2 Technical Report, Google, https://ai.google/static/documents/palm2techreport.pdf(n.d.)), sequence processing models that can process image data (e.g., Dosovitskiy et al., An Image is Worth 16x16 Words: Transformers for Image Recognition at Scale, arXiv:2010.11929v2 (Jun. 3, 2021)), sequence processing models that can process audio data (e.g., Agostinelli et al., MusicLM: Generating Music From Text, arXiv:2301.11325v1 (Jan. 26, 2023)), sequence processing models that can process biochemical data (e.g., Jumper et al., Highly accurate protein structure prediction with AlphaFold, 596 Nature 583 (Aug. 26, 2021)), etc. In general, a sequence processing model can process one or more types of data simultaneously. A sequence processing model can include relatively large models (e.g., models that process a large number of parameters, models that are computationally expensive, etc.), relatively small models (e.g., models that process a fewer number of parameters, models that are computationally lightweight, etc.), or both.

In some examples, machine learning module 310 can be or include one or more artificial neural networks (also referred to simply as neural networks). A neural network can include a group of connected nodes, which also can be referred to as neurons or perceptrons. A neural network can be organized into one or more layers. Neural networks that include multiple layers can be referred to as "deep" networks. A deep network can include an input layer, an output layer, and one or more hidden layers positioned between the input layer and the output layer. The nodes of the neural network can be connected or non-fully connected.

Machine learning module 310 can be or include one or more feed forward neural networks. In feed forward networks, the connections between nodes do not form a cycle. For example, each connection can connect a node from an earlier layer to a node from a later layer.

In some instances, machine learning module 310 can be or include one or more recurrent neural networks. In some instances, at least some of the nodes of a recurrent neural network can form a cycle. Recurrent neural networks can be especially useful for processing input data that is sequential in nature. In particular, in some instances, a recurrent neural network can pass or retain information from a previous portion of input data 333 sequence to a subsequent portion of input data 333 sequence through the use of recurrent or directed cyclical node connections.

In some examples, sequential input data can include time-series data (e.g., sensor data versus time or imagery captured at different times). For example, a recurrent neural network can analyze sensor data versus time to detect or predict a swipe direction, to perform handwriting recognition, etc. Sequential input data may include words in a sentence (e.g., for natural language processing, speech detection or processing, etc.); notes in a musical composition; sequential actions taken by a user (e.g., to detect or predict sequential application usage); sequential object states; etc.

Example recurrent neural networks include long short-term (LSTM) recurrent neural networks; gated recurrent units; bi-direction recurrent neural networks; continuous time recurrent neural networks; neural history compressors; echo state networks; Elman networks; Jordan networks; recursive neural networks; Hopfield networks; fully recurrent networks; sequence-to-sequence configurations; etc.

In some examples, machine learning module 310 can be or include one or more convolutional neural networks. In some instances, a convolutional neural network can include one or more convolutional layers that perform convolutions over input data using learned filters.

Filters can also be referred to as kernels. Convolutional neural networks can be especially useful for vision problems such as when input data 333 includes imagery such as still images or video. However, convolutional neural networks can also be applied for natural language processing.

In some examples, machine learning module 310 can be or include one or more generative networks such as, for example, generative adversarial networks. Generative networks can be used to generate new data such as new images or other content.

Machine learning module 310 may be or include an autoencoder. In some instances, the aim of an autoencoder is to learn a representation (e.g., a lower- dimensional encoding) for a set of data, typically for the purpose of dimensionality reduction. For example, in some instances, an autoencoder can seek to encode input data 333 and then provide output data that reconstructs input data 333 from the encoding. Recently, the autoencoder concept has become more widely used for learning generative models of data. In some instances, the autoencoder can include additional losses beyond reconstructing input data 333.

Machine learning module 310 may be or include one or more other forms of artificial neural networks such as, for example, deep Boltzmann machines; deep belief networks; stacked autoencoders; etc. Any of the neural networks described herein can be combined (e.g., stacked) to form more complex networks.

One or more neural networks can be used to provide an embedding based on input data 333. For example, the embedding can be a representation of knowledge abstracted from input data 333 into one or more learned dimensions. In some instances, embeddings can be a useful source for identifying related entities. In some instances, embeddings can be extracted from the output of the network, while in other instances embeddings can be extracted from any hidden node or layer of the network (e.g., a close to final but not final layer of the network). Embeddings can be useful for performing auto suggest next video, product suggestion, entity or object recognition, etc. In some instances, embeddings can be useful inputs for downstream models. For example, embeddings can be useful to generalize input data (e.g., search queries) for a downstream model or processing system.

Machine learning module 310 may include one or more clustering models such as, for example, k-means clustering models; k-medians clustering models; expectation maximization models; hierarchical clustering models; etc.

In some examples, machine learning module 310 can perform one or more dimensionality reduction techniques such as, for example, principal component analysis; kernel principal component analysis; graph-based kernel principal component analysis; principal component regression; partial least squares regression; Sammon mapping; multidimensional scaling; projection pursuit; linear discriminant analysis; mixture discriminant analysis; quadratic discriminant analysis; generalized discriminant analysis; flexible discriminant analysis; autoencoding; etc.

In some examples, machine learning module 310 can perform or be subjected to one or more reinforcement learning techniques such as Markov decision processes; dynamic programming; Q functions or Q-learning; value function approaches; deep Q-networks; differentiable neural computers; asynchronous advantage actor-critics; deterministic policy gradient; etc.

In some examples, machine learning module 310 can be an autoregressive model. In some instances, an autoregressive model can specify that output data 335 depends linearly on its own previous values and on a stochastic term. In some instances, an autoregressive model can take the form of a stochastic difference equation. One example autoregressive model is WaveNet, which is a generative model for raw audio.

In some examples, machine learning module 310 can include or form part of a multiple model ensemble. As one example, bootstrap aggregating can be performed, which can also be referred to as "bagging." In bootstrap aggregating, a training dataset is split into a number of subsets (e.g., through random sampling with replacement) and a plurality of models are respectively trained on the number of subsets. At inference time, respective outputs of the plurality of models can be combined (e.g., through averaging, voting, or other techniques) and used as the output of the ensemble.

One example ensemble is a random forest, which can also be referred to as a random decision forest. Random forests are an ensemble learning method for classification, regression, and other tasks. Random forests are generated by producing a plurality of decision trees at training time. In some instances, at inference time, the class that is the mode of the classes (classification) or the mean prediction (regression) of the individual trees can be used as the output of the forest. Random decision forests can correct for decision trees' tendency to overfit their training set.

Another example ensemble technique is stacking, which can, in some instances, be referred to as stacked generalization. Stacking includes training a combiner model to blend or otherwise combine the predictions of several other machine-learned models. Thus, a plurality of machine-learned models (e.g., of same or different type) can be trained based on training data. In addition, a combiner model can be trained to take the predictions from the other machine-learned models as inputs and, in response, produce a final inference or prediction. In some instances, a single-layer logistic regression model can be used as the combiner model.

Another example of an ensemble technique is boosting. Boosting can include incrementally building an ensemble by iteratively training weak models and then adding to a final strong model. For example, in some instances, each new model can be trained to emphasize the training examples that previous models misinterpreted (e.g., misclassified). For example, a weight associated with each of such misinterpreted examples can be increased. One common implementation of boosting is AdaBoost, which can also be referred to as Adaptive Boosting. Other example boosting techniques include LPBoost; TotalBoost; BrownBoost; xgboost; MadaBoost, LogitBoost, gradient boosting; etc. Furthermore, any of the models described above (e.g., regression models and artificial neural networks) can be combined to form an ensemble. As an example, an ensemble can include a top level machine-learned model or a heuristic function to combine and/or weight the outputs of the models that form the ensemble.

In some examples, multiple machine-learned models (e.g., that form an ensemble can be linked and trained jointly (e.g., through backpropagation of errors sequentially through the model ensemble). However, in some examples, only a subset (e.g., one) of the jointly trained models is used for inference.

In some examples, machine learning module 310 can be used to preprocess input data 333 for subsequent input into another model. For example, machine learning module 310 can perform dimensionality reduction techniques and embeddings (e.g., matrix factorization, principal components analysis, singular value decomposition, word2vec/GLOVE, and/or related approaches); clustering; and even classification and regression for downstream consumption.

As discussed above, machine learning module 310 can be trained or otherwise configured to receive input data 333 and, in response, provide output data 335. Input data 333 can include different types, forms, or variations of input data. As examples, in various implementations, input data 333 can include features that describe the content (or portion of content) initially selected by the user, e.g., content of user-selected document or image, links pointing to the user selection, links within the user selection relating to other files available on device or cloud, metadata of user selection, etc. Additionally, with user permission, input data 333 includes the context of user usage, either obtained from the app itself or from other sources. Examples of usage context include breadth of share (sharing publicly, or with a large group, or privately, or a specific person), context of share, etc. When permitted by the user, additional input data can include the state of the device, e.g., the location of the device, the apps running on the device, etc.

In some examples, machine learning module 310 can receive and use input data 333 in its raw form. In some examples, the raw input data can be preprocessed. Thus, in addition or alternatively to the raw input data, machine learning module 310 can receive and use the preprocessed input data.

In some examples, preprocessing input data 333 can include extracting one or more additional features from the raw input data. For example, feature extraction techniques can be applied to input data 333 to generate one or more new, additional features. Example feature extraction techniques include edge detection; corner detection; blob detection; ridge detection; scale-invariant feature transform; motion detection; optical flow; Hough transform; etc.

In some examples, the extracted features can include or be derived from transformations of input data 333 into other domains and/or dimensions. As an example, the extracted features can include or be derived from transformations of input data 333 into the frequency domain. For example, wavelet transformations and/or fast Fourier transforms can be performed on input data 333 to generate additional features.

In some examples, the extracted features can include statistics calculated from input data 333 or certain portions or dimensions of input data 333. Example statistics include the mode, mean, maximum, minimum, or other metrics of input data 333 or portions thereof.

In some examples, as described above, input data 333 can be sequential in nature. In some instances, the sequential input data can be generated by sampling or otherwise segmenting a stream of input data. As one example, frames can be extracted from a video. In some examples, sequential data can be made non-sequential through summarization.

As another example preprocessing technique, portions of input data 333 can be imputed. For example, additional synthetic input data can be generated through interpolation and/or extrapolation.

As another example preprocessing technique, some or all of input data 333 can be scaled, standardized, normalized, generalized, and/or regularized. Example regularization techniques include ridge regression; least absolute shrinkage and selection operator (LASSO); elastic net; least-angle regression; cross-validation; L1 regularization; L2 regularization; etc. As one example, some or all of input data 333 can be normalized by subtracting the mean across a given dimension's feature values from each individual feature value and then dividing by the standard deviation or other metric.

As another example preprocessing technique, some or all or input data 333 can be quantized or discretized. In some cases, qualitative features or variables included in input data 333 can be converted to quantitative features or variables. For example, one hot encoding can be performed.

In some examples, dimensionality reduction techniques can be applied to input data 333 prior to input into machine learning module 310. Several examples of dimensionality reduction techniques are provided above, including, for example, principal component analysis; kernel principal component analysis; graph-based kernel principal component analysis; principal component regression; partial least squares regression; Sammon mapping; multidimensional scaling; projection pursuit; linear discriminant analysis; mixture discriminant analysis; quadratic discriminant analysis; generalized discriminant analysis; flexible discriminant analysis; autoencoding; etc.

In some examples, during training, input data 333 can be intentionally deformed in any number of ways to increase model robustness, generalization, or other qualities. Example techniques to deform input data 333 include adding noise; changing color, shade, or hue; magnification; segmentation; amplification; etc.

In response to receipt of input data 333, machine learning module 310 can provide output data 335. Output data 335 can include different types, forms, or variations of output data. As examples, in various implementations, output data 335 can include content, either stored locally on the user device or in the cloud, that is relevantly shareable along with the initial content selection.

As discussed above, in some examples, output data 335 can include various types of classification data (e.g., binary classification, multiclass classification, single label, multi- label, discrete classification, regressive classification, probabilistic classification, etc.) or can include various types of regressive data (e.g., linear regression, polynomial regression, nonlinear regression, simple regression, multiple regression, etc.). In other instances, output data 335 can include clustering data, anomaly detection data, recommendation data, or any of the other forms of output data discussed above.

In some examples, output data 335 can influence downstream processes or decision making. As one example, in some examples, output data 335 can be interpreted and/or acted upon by a rules-based regulator.

Any of the different types or forms of input data described herein can be combined with any of the different types or forms of machine-learned models described herein to provide any of the different types or forms of output data described herein.

The systems and methods of the present disclosure can be implemented by or otherwise executed on one or more computing devices. Example computing devices include user computing devices (e.g., laptops, desktops, and mobile computing devices such as tablets, smartphones, wearable computing devices, etc.); embedded computing devices (e.g., devices embedded within a vehicle, camera, image sensor, industrial machine, satellite, gaming console or controller, or home appliance such as a refrigerator, thermostat, energy meter, home energy manager, smart home assistant, etc.); server computing devices (e.g., database servers, parameter servers, file servers, mail servers, print servers, web servers, game servers, application servers, etc.); dedicated, specialized model processing or training devices; virtual computing devices; other computing devices or computing infrastructure; or combinations thereof. A computing system that implements machine learning module 310 or other aspects of the present disclosure may include a number of hardware components that enable the performance of the techniques described herein.

In some instances, output data 335 obtained through machine learning module 310 at a computing system or device can be used to improve other device tasks or can be used by other non-user devices to improve services performed by or for such other non-user devices. For example, output data 335 can improve other downstream processes performed by a server device for a computing device of a user or embedded computing device. In other instances, output data 335 obtained through implementation of machine learning module 310 at a computing system or device can be sent to and used by a user computing device, an embedded computing device, or some other client device. In some examples, computing system 200 of FIG. 2 may perform machine learning as a service.

In yet other implementations, different respective portions of machine learning module 310 can be stored at and/or implemented by some combination of a user computing device; an embedded computing device; a server computing device; etc. In other words, portions of machine learning module 310 may be distributed in whole or in part amongst a client device (e.g., computing device 112 of FIG. 1) and a computing system (e.g., computing system 100 of FIG. 1).

A computing device such as computing device 112 of FIG. 1 may perform graph processing techniques or other machine learning techniques using one or more machine learning platforms, frameworks, and/or libraries, such as, for example, TensorFlow, Caffe/Caffe2, Theano, Torch/PyTorch, MXnet, CNTK, etc.

In some examples, multiple instances of machine learning module 310 can be parallelized to provide increased processing throughput. For example, the multiple instances of machine learning module 310 can be parallelized on a single processing device or computing device or parallelized across multiple processing devices or computing devices.

A computing device that implements machine learning module 310 or other aspects of the present disclosure can include a number of hardware components that enable performance of the techniques described herein. For example, a computing device can include one or more memory devices that store some or all of machine learning module 310. For example, machine learning module 310 can be a structured numerical representation that is stored in memory. The one or more memory devices can also include instructions for implementing machine learning module 310 or performing other operations. Example memory devices include RAM, ROM, EEPROM, EPROM, flash memory devices, magnetic disks, etc., and combinations thereof.

A computing device can also include one or more processing devices that implement some or all of machine learning module 310 and/or perform other related operations. Example processing devices include one or more of: a central processing unit (CPU); a visual processing unit (VPU); a graphics processing unit (GPU); a tensor processing unit (TPU); a neural processing unit (NPU); a neural processing engine; a core of a CPU, VPU, GPU, TPU, NPU or other processing device; an application specific integrated circuit (ASIC); a field programmable gate array (FPGA); a co-processor; a controller; or combinations of the processing devices described above. Processing devices can be embedded within other hardware components such as, for example, an image sensor, accelerometer, etc.

Hardware components (e.g., memory devices and/or processing devices) can be spread across multiple physically distributed computing devices and/or virtually distributed computing systems.

In some examples, machine learning module 310 described herein can be included in different portions of computer-readable code on a computing device. In one example, machine learning module 310 can be included in a particular application or program and used (e.g., exclusively) by such a particular application or program. Thus, in one example, a computing device can include a number of applications and one or more of such applications can contain its own respective machine learning library and machine-learned model(s).

In another example, machine learning module 310 described herein can be included in an operating system of a computing device (e.g., in a central intelligence layer of an operating system) and can be called or otherwise used by one or more applications that interact with the operating system. In some examples, each application can communicate with the central intelligence layer (and model(s) stored therein) using an application programming interface (API) (e.g., a common, public API across all applications).

In some examples, the central intelligence layer can communicate with a central device data layer. The central device data layer can be a centralized repository of data for the computing device. The central device data layer can communicate with a number of other components of the computing device, such as, for example, one or more sensors, a context manager, a device state component, and/or additional components. In some examples, the central device data layer can communicate with each device component using an API (e.g., a private API).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination.

Databases and applications can be implemented on a single system or distributed across multiple systems. Distributed components can operate sequentially or in parallel.

In addition, the machine learning techniques described herein are readily interchangeable and combinable. Although certain example techniques have been described, many others exist and can be used in conjunction with aspects of the present disclosure.

Further to the descriptions above, a user may be provided with controls that enable the user to make an election as to both if and when systems, programs or features described herein may enable collection of user information (e.g., information about a user's social network, social actions or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

FIG. 3C is a conceptual diagram illustrating a machine learning module configured to apply a large language model that accepts natural language input and provides code for corresponding graphical user interfaces and application functionality as output, in accordance with one or more techniques of this disclosure. Machine learning module 310 of FIG. 3C may be an example of machine learning module 310 of FIGS. 3A and 3B. In general, ML module 310 can be or include one or more transformer-based neural networks, such as a large language model module 342. Language model module 342 may implement, for example, the Pathways Language Model developed by Google. Transformer-based neural networks may refer to a type of deep learning architecture specifically designed for handling sequential data, such as text or time series. In other words, transformer-based neural networks like LLMs may be configured to perform natural language processing (NLP) tasks, such as question-answering, machine translation, text summarization, and sentiment analysis. Language model module 342 may be configured to perform tasks such as classification, sentiment analysis, entity extraction, extractive question answering, summarization, re-writing text in a different style, ad copy generation, and concept ideation.

Transformer-based neural networks may utilize a self-attention mechanism, which allows the model to weigh the importance of different elements in a given input sequence relative to each other. The self-attention mechanism may help language model module 342 effectively capture long-range dependencies and complex relationships between elements, such as words in a sentence.

Language model module 342 may include an encoder and a decoder that operate to process and generate sequential data, such as structured text. Both the encoder and decoder may include one or more of self-attention mechanisms, position-wise feedforward networks, layer normalization, or residual connections. In some examples, the encoder may process an input sequence and create a representation that captures the relationships and context among the elements in the sequence. The decoder may then obtain the representation generated by the encoder and produce an output sequence. In some examples, the decoder may generate the output one element at a time (e.g., one word at a time), using a process called autoregressive decoding, where the previously generated elements are used as input to predict the next element in the sequence.

In some examples, if user intent is unclear, machine learning module 310 may be unable to determine the user's intent with high confidence. In such instances, instructions file 346, which includes the set of instructions, may include instructions for prompting the user to clarify their input. In these examples, when instructions file 346 is executed, the program may be paused for these disambiguation steps. In some examples, the prompt may include a list of options, a map, a question, etc. For example, if a user provides an input such as "Book appointment for Jane," the computing system may generate a widget that includes a map with multiple pediatrician locations, and the user may be prompted to clarify which specific pediatrician they would like to book Jane's appointment at. In some examples, after the user clarifies their intent, instructions file 346 may continue to execute based on the clarified intent. In some examples, responsive to receiving clarified intent, feedback, and/or additional user input, the computing system may update instructions file 346 accordingly.

In general, language model module 342 may apply an LLM to the indication of the natural language input to identify one or more user intents (which may be considered tasks). In some examples, language model module 342 may determine a set of information types included in the input (e.g., text or audio input or a transcription generated by speech-to-text module 226). An information type may be or otherwise include a topic, theme, point, subject, purpose, intent, keyword, etc. In some examples, language model module 342 may determine the information type by leveraging a self-attention mechanism to capture the relationships and dependencies between words in the input sequence. For example, language model module 342 may tokenize (e.g., split) a sequence of words or subwords, which language model module 342 may convert into vectors (e.g., numerical representations) that language model module 342 can process. Language model module 342 may use the self-attention mechanism to weigh the importance of each token in relation to the others. In this way, language model module 342 may identify patterns and relationships between the tokens, and in turn the words corresponding to the tokens, that indicate one or more information types of the accessibility information.

In general, language model module 342 may excel at performing NLP tasks, such as generating text and other content (e.g., new code that provides graphical components and functionality for performing one or more tasks). However, with respect to specific types of content (e.g., specific information types), language model module 342 may have an increased likelihood of generating false, inaccurate, or bad quality information. To address this issue, language model module 342 may be configured to exclude the generation of content or code relating to a set of excluded information types. For example, the set of excluded information types may include one or more of phone numbers, addresses, web addresses, functionality prohibited by an application, sensitive data (e.g., full bank account information), etc. Thus, input information may be passed in language model module 342 with certain prerequisites, prompts, or "rules" that can be stored in rules storage 344. Machine learning module 310 may apply these prerequisites, prompts, or rules when generating the set of instructions, or new code, associated with the functionality for performing the identified tasks and subtasks, and the corresponding GUIs and graphical components.

For example, machine learning module 310 may implement a rule such as, "Do not include user's sensitive information" when generating instructions for generating a "Transfer Funds" widget that includes pre-populated input (e.g., instead of including a user's full bank account number, the pre-populated input may include a string such as, "Bank Account ending in 1234"). In some examples, machine learning module 210 may use accessibility information when generating new code for GUIs and graphical components, such that the user can easily interact with the GUIs and graphical components. In some examples, the rules may be text inputs such as, for example, "Keep GUI headings short." As such, rules storage 344 may store a plurality of text inputs and/or other data that further specify how instructions file 346 should be generated by machine learning module 310. For example, language model module 342 may be applied to the indication of the natural language input in accordance with the one or more predefined rules stored in rules storage 344, which may include, for example, unauthorized terms, unauthorized class names, unauthorized dimensions of the graphical user interface, unauthorized application functionality, etc. Because language model module 342 can interpret the rules along with the input, the computing system may provide more accurate instructions for generating functionality and associated GUIs and graphical components for performing identified tasks. In this way, the computing system may be able to interpret natural language to understand user intents, and then write or generate new, robust, working code that satisfies the user intents, can perform calculations, and can render new graphical user interfaces or components at machine speed, etc.

Furthermore, machine learning module 310 may determine a temporal parameter for each graphical component and/or graphical element included in a graphical component. In some examples, machine learning module 310 may analyze at least a portion of the input data (e.g., at least a portion of the retrieved information and/or at least a portion of the indication of the natural language input) to determine one or more of explicit temporal information and implicit temporal information, in which machine learning module 310 further determines the temporal parameter based on one or more of the explicit temporal information and the implicit temporal information. As an example, a graphical component that is generated to fulfill the user intent of receiving a reminder for the meeting with John may be automatically deleted from a home screen of the user's device after the date and time for which the meeting was scheduled.

In some examples, machine learning module 310 may determine a plurality of user interface layouts based on at least a portion of the input data (e.g., at least a portion of the retrieved information and/or at least a portion of the indication of the natural language input). In some examples, each user interface layout is associated with one or more of at least one unique temporal parameter and at least one unique visual characteristic. In some examples, the portion of the information is indicative of one or more rules for the plurality of user interface layouts, which may be stored in rules storage 344. In some examples, the indication of the natural language input indicates a selected user interface layout from the plurality of user interface layouts, and machine learning module 310 generates instructions file 346 for generating the at least one graphical component in accordance with the selected user interface layout. In some examples, machine learning module 310 determines a priority score for each user interface layout from the plurality of user interface layouts, and generates instructions file 346 for generating the at least one graphical component in accordance with a user interface layout with a highest priority score.

While language model module 342 may be a transformer-based neural network in some examples, in some examples, language model module 342 may be or otherwise include one or more other types of neural networks. For example, language model module 342 may be or include an autoencoder. In some examples, the aim of an autoencoder is to learn a representation (e.g., a lower- dimensional encoding) for a set of data, typically for the purpose of dimensionality reduction. For example, in some examples, an autoencoder can seek to encode the input data and then provide output data that reconstructs the input data from the encoding. In some examples, the autoencoder can include additional losses beyond reconstructing the input data.

Generally, large language models can be slow and expensive in terms of carbon, energy usage, and financial cost. Thus, in some examples, machine learning module 310 may minimize how often language model module 342 is invoked by caching the generated set of instructions, or new code, in instructions cache 348. In general, language model module 342 may use a prompt including user intent (e.g., the output from speech-to-text module 226 of FIG. 2) and any contextual information received by the computing system. More specifically, in some examples, prior to generating the set of instructions, the computing system may perform "memory injection," which may be considered a process in which an identified task may be passed to a system that can look up and append additional context to the task. As an example, identified tasks such as "Send money to John" and "Book Jane's appointment," may be passed as input to machine learning module 310, in which machine learning module 310 may determine if any relevant context information has been stored by the computing system. In this example, machine learning module 310 may determine the following relevant context information: "The user has a husband called John" and "The user has a daughter aged 3 called Jane." Machine learning module 310 may then include both the user input (e.g., the identified tasks) and the relevant context information in a prompt, which may then be used to generate the set of instructions. In general, it should be understood that machine learning module 310 may implement one or more self-prompting or recursive prompting models, e.g., language model module 342 may generate prompts based on retrieved application information, user input, context information, etc., which may involve generating follow-up questions, inferences, or further instructions that can guide subsequent stages of processing.

Furthermore, a prompt may include one or more APIs from API module 206, in which the one or more APIs may then be included in instructions file 346. As such, instructions file 346 may include instructions for gathering more specific details or data at runtime (e.g., one or more task APIs may send requests to the one or more applications at runtime). In this way, portions of generated code may be reused. Specifically, machine learning module 310 may be configured to perform instruction embedding in which a representation (i.e., embedding) of frequently used or critical instructions are stored in instructions cache 348. In various examples, instructions file 346 may be generated based on the instructions stored in instructions cache 348 and any additional instructions, information, or updates retrieved by an API at runtime that are not present in instructions cache 348. For example, if a user provides an input such as "reschedule today's meeting," language model module 342 may generate a general set of instructions for rescheduling any meeting on any day and store the instructions in instructions cache 348. If the user provides the same "reschedule today's meeting" command in the future, language model module 342 may generate instructions file 346 including the cached instructions and an API call that retrieves, e.g., calendar application data pertaining to the future date. Thus, instructions file 346 may provide functionality for rescheduling a specific meeting on the future date.

By storing frequently used or critical instructions in instructions cache 348, machine learning module 310 may reuse the frequently used or critical instructions without having to invoke language model module 342 on data other than what is included in the prompt (e.g., language model module 342 may not have to re-apply the large language model to the information associated with the predefined functions included in the one or more applications). In some examples, the prompt may only include contextual information, and data indicative of user intent may be stored in instructions cache 348. In some examples, machine learning module 310 may apply code caching to both compiled and interpreted languages. Machine learning module 310 may implement various types of caching, such as, for example, Just-In-Time (JIT) compilation, Ahead-Of-Time (AOT) compilation, and bytecode caching.

As such, in general, machine learning module 310 may generate instructions file 346 using language model module 342, in which instructions file 346 may be generated based on one or more of application functionality, capabilities, and/or attributes included in retrieved application information, contextual information (e.g., user data), the natural language audio or text input received by the computing system, and/or the transcribed text output from a speech-to-text module. That is, using the information associated with the plurality of functions, a prompt may be generated by machine learning module 310, in which the prompt may specify output format, allowed data types, a UI component library that can be used to build end result UI, an API library including APIs that can be used to retrieve data from the applications at runtime, user input (e.g., the identified tasks), and context information. The prompt may then be provided to language model module 342 as input, in which language model module 342 may then generate instructions file 346 that includes code for accessing relevant device APIs and returning relevant UI components that provide functionality for performing tasks.

The prompt(s) used to generate instructions file 346 may be used by machine learning module 310 to determine whether a user's desired application functionality or "new" application functionality is possible or within reason (e.g., a task widget may not be associated with functionality for transferring funds if the user does not have a banking application downloaded on their user device). In general, the set of instructions, and/or the "generated," "desired," or "new" functionality described herein may be defined as functionality or code that is dynamically generated by machine learning module 310 on the basis of the retrieved information associated with predefined application functionality, user input, and other information retrieved from a user computing device. In some examples, the at least one function for performing a respective task may include a combination of data and/or predefined application functionality retrieved from different applications. In general, the graphical components, e.g., task widgets, associated with the at least one function for performing a respective task may provide a "shortcut" for completing the respective task. A GUI with a graphical shortcut is therefore provided for a respective task. For example, instead of requiring a user to navigate through a messaging application to find out how much money the user needs to send to John, and then having to navigate through a banking application to search for John's banking account username, initiate a new transfer, and manually enter in all relevant information, a single task widget may provide the user the functionality for performing all of the aforementioned actions, e.g., automatically, or with one or more simple clicks or interactions with the task widget.

Furthermore, a prompt may be "rerun" by machine learning module 310 based on a respective temporal parameter. That is, a prompt for generating a widget that provides information that is frequently updated may be reused to generate instructions for updating instructions file 346. Instructions file 346 may be stored in a memory of the computing system such that instructions file 346 can be resent, updated, or sent to a computing device associated with the user.

In some examples, instructions file 346 may include all data collected or used by the computing system to generate instructions file 346. For example, instructions file 346 may include details for how the user's natural language was resolved into working code. In some examples, users may be able to view or "inspect" instructions file 346. In other words, a user may be provided various controls to clarify, inspect, or stop a task to ensure that the computing system is following the user's intent. Thus, the generated graphical components may be inspectable, in which users can, for example, interact with widgets to see the associated data, code or instructions (e.g., instructions file 346), or pinch to expand widgets to reveal more controls. Furthermore, a user may be able to edit instructions file 346. For example, a user may edit the intent or parameters used by machine learning module 310, and instructions file 346 may be updated to reflect the edits. Furthermore, as described further below, users may interact with graphical components to cause the graphical components to be updated and/or deleted, directly edit parameters, edit the order of the graphical components, the positioning of the graphical components, change, add, or delete visual effects, etc. As such, any predetermined or suggested input determined by machine learning module 310, the functionality generated by machine learning module 310, the graphical components, and any other data included in instructions file 346 may be customizable or user-configurable.

In general, by leveraging language model module 342, the user interface generation provided by the computing system may require less time and/or effort to create new functionality and/or graphical user interfaces and components for performing a user's identified tasks. That is, instead of users having to remember multiple tasks and navigate through multiple applications and user interfaces to access relevant information and functionality for performing their multiple tasks, the techniques of this disclosure may provide users the ability to quickly have their tasks organized into GUIs by simply providing natural language input. Furthermore, the organized GUIs may further provide users the ability to quickly perform their tasks, as doing so may only require a user to simply interact with a single widget. Additionally, the techniques described herein may allow users to create hyper-personalized graphical components (e.g., widgets) that can help them perform various tasks, receive various information, reminders, etc., in which the graphical components may be dynamically updated based on a temporal parameter that is determined by the computing system. As such, users may not have to manually edit the user interfaces displayed on their personal devices, which may help to improve overall user experience and interaction with personal devices.

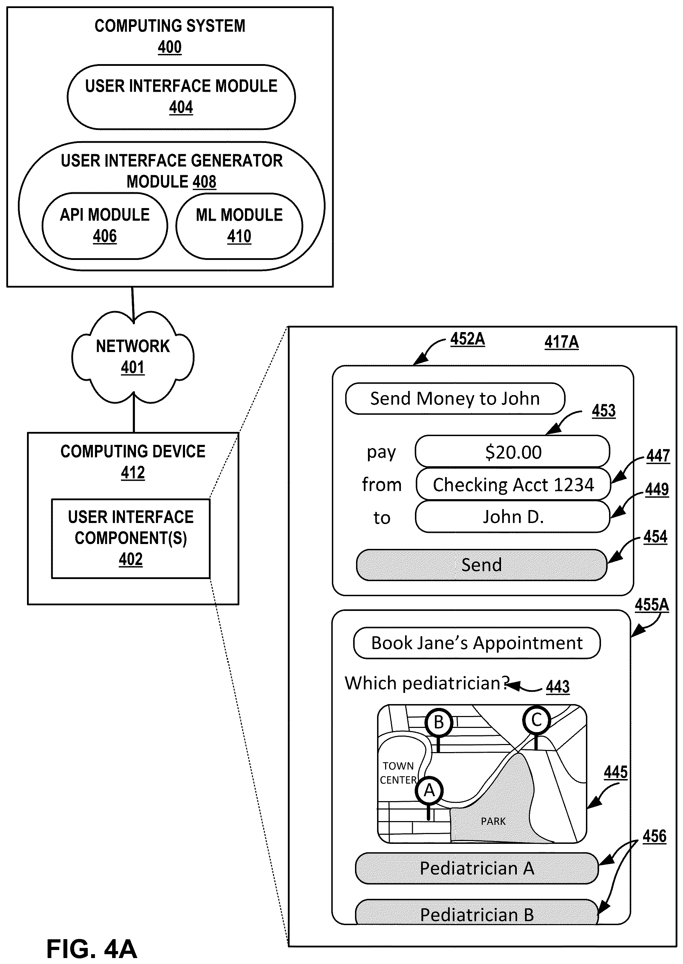

FIGS. 4A-4C are conceptual diagrams illustrating another example computing system for generating custom graphical components that dynamically update based on a temporal parameter, in accordance with one or more techniques of this disclosure. Computing system 400 may be similar if not substantially similar to computing system 100 of FIG. 1 and computing system 200 of FIG. 2. Computing device 412 may be similar if not substantially similar to computing device 112 of FIG. 1. User interface (UI) components 402 may be similar if not substantially similar to UI components 102 of FIG. 1. Network 401 may be similar if not substantially similar to network 101 of FIG. 1. GUI 417A, GUI 417B, and GUI 417C may each represent another view of GUI 117 of FIG. 1. Furthermore, some or all of the techniques described with respect to computing system 400 may be implemented locally on computing device 412.

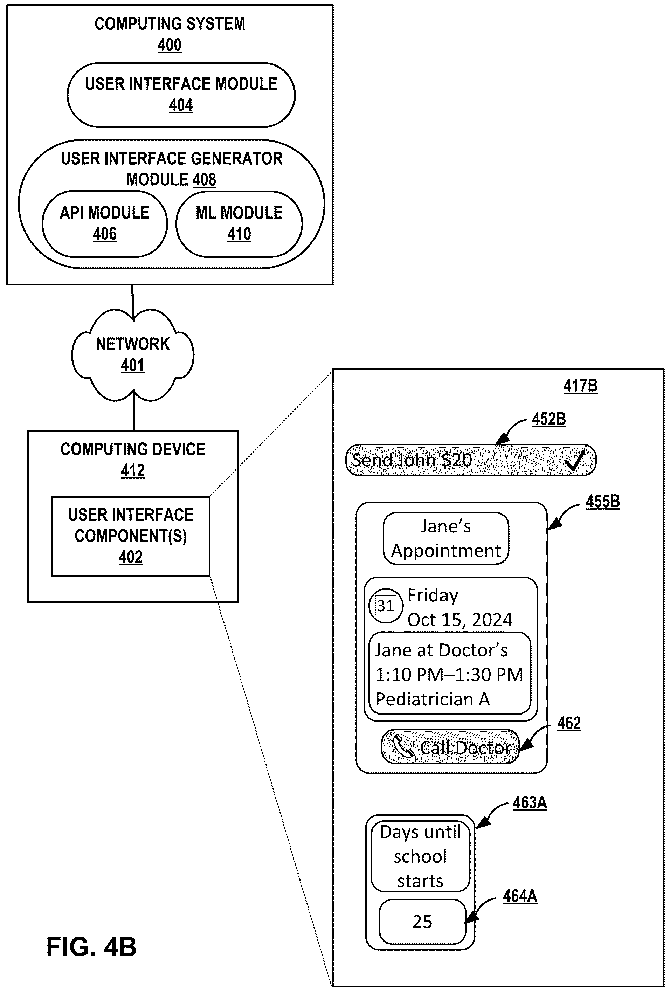

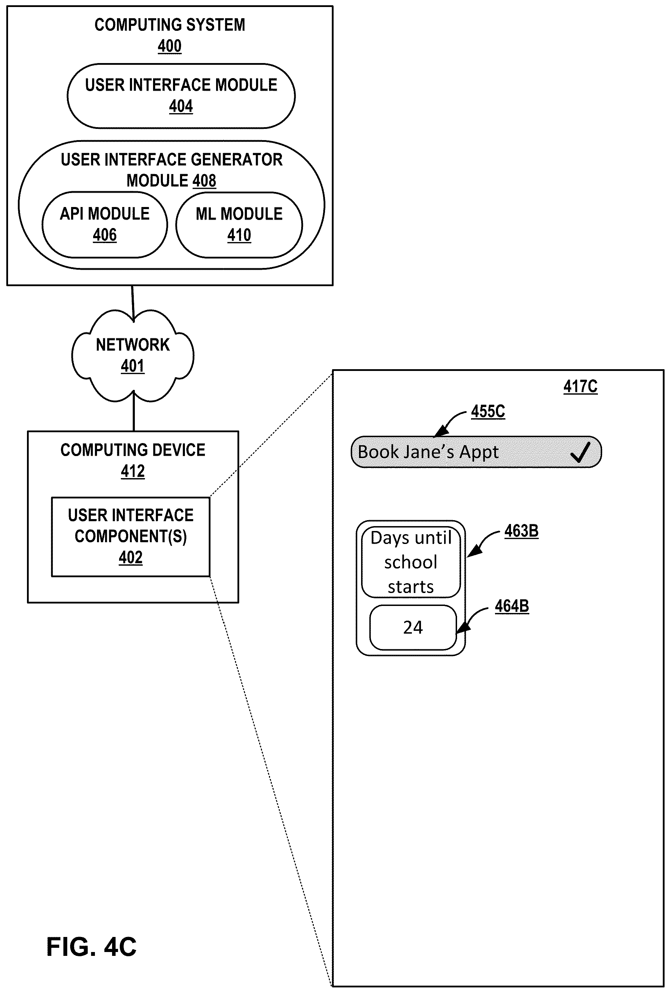

In the example of FIG. 4, with explicit consent from a user associated with computing device 412, computing system 400 may retrieve, using API module 406, information associated with predefined functions included in one or more applications executing at computing device 412. With explicit consent from the user, computing system 400 may also retrieve, using API module 406, other data and/or context information from computing device 412, such as historical user data, device data, user activity data, etc. In one example, UI module 404 may receive, from computing device 412, an indication of a voice input that includes one or more commands and/or user intents, such as, e.g., "Create a widget that helps me send money to John, help me book a doctor's appointment for Jane, and create a reminder for how many days there are until school starts." In general, the input may be associated with one or more predefined functions included in the one or more applications. For example, sending money and selecting a recipient for the money may be examples of predefined functionality for a banking application, booking an appointment may be an example of predefined functionality for a healthcare application, selecting a recipient for a message and sending the message may be examples of predefined functionality for a messaging application, and browsing the Internet for various information may be an example of predefined functionality for a web browser application.

Computing system 400 may apply machine learning module 410 (e.g., a large language model) to the natural language input to identify one or more user intents. For example, machine learning module 410 may identify a first user intent, "Create a widget that helps me send money to John," a second user intent, "Help me book a doctor's appointment for Jane," and a third user intent, "Create a reminder for how many days there are until school starts." In some examples, machine learning module 410 may use the retrieved information, data, and/or context information from computing device 412 to determine user intent. For example, data retrieved from computing device 412 may indicate that Jane is a child (and thus would require an appointment with a pediatrician). Furthermore, a text message received from John D. that states, "Can you send me $20?", and another text message received from another family member that states, "Can you book Jane's doctor's appointment for next week?" may further provide additional context information for determining user intent. For example, in this example, computing system 400 may determine, based on the text message, that the "John" referred to in the user's input is specifically John D., and not John B., John C., or John L., as the text message was received from John D.

Using the information retrieve by API module 406, computing system 400 may apply machine learning module 410 to the one or more identified user intents to generate a set of instructions, e.g., code, that provides corresponding graphical components and/or application functionality for fulfilling the one or more identified user intents. For example, continuing the example above, based on data retrieved from computing device 412, machine learning module 410 may determine that fulfilling the first user intent requires functionality for sending $20 from the user's preferred bank account to John D.'s bank account. Machine learning module 410 may determine that fulfilling the second user intent requires functionality for booking an appointment for Jane at a local pediatrician next week at a time outside of the user's scheduled meetings. Therefore, fulfilling each user intent, e.g., performing a task, may require functionality from multiple different applications.

In general, UI generator module 408 may apply, using the information associated with the plurality of functions, machine learning module 410 to the one or more user intents to generate a set of instructions. The set of instructions may be considered dynamic and may be generated at runtime based on user input and retrieved information. Furthermore, the set of instructions may combine data retrieved from the one or more applications, such that a user may complete a task, receive information, etc. without having to navigate through the multiple associated applications. Continuing the example above, the set of instructions may include instructions for generating widget 452A that provides at least one function for sending $20 from the user's preferred bank account to John D.'s bank account, and instructions for generating widget 455A that provides at least one function for booking an appointment for Jane at a local pediatrician next week at a time outside of the user's scheduled meetings.

That is, as shown in the example of FIG. 4A, the set of instructions may include instructions for generating widget 452A, titled "Send Money to John," which is associated with the at least one function for sending $20 from the user's preferred bank account to John D.'s bank account. Specifically, widget 452A, as shown, includes prepopulated text entry fields, such as "pay" text entry field 453 that is prepopulated with an input of "$20.00," "from" text entry field 447 that is prepopulated with an input of "Checking Acct 1234," and "to" text entry field 449 that is prepopulated with an input of "John D." As further shown, widget 452A includes "Send" button 454, which may be configured to provide the generated functionality that sends $20 from the user's bank account ending in 1234 to John D.'s bank account upon the user interacting with "Send" button 454.

As further shown in the example of FIG. 4A, the set of instructions may include instructions for generating widget 455A titled "Book Jane's Appointment," which is associated with the at least one function for booking an appointment for Jane at a local pediatrician next week at a time outside of the user's scheduled meetings. However, in some examples, such as this example, machine learning module 410 may not have enough data to determine the user's intent with high confidence. Therefore, as shown in the example of FIG. 4A, widget 455A includes text prompt 443 "Which pediatrician?", map 445 showcasing the locations of pediatrician A, pediatrician B, and pediatrician C, and one or more suggested inputs, which are shown as buttons 456 that each correspond to a specific pediatrician. That is, in some examples, computing system 400 may output instructions for prompting a user to provide at least one additional input. Computing system 400 may receive an indication of the at least one additional input, and may apply machine learning module 410 to at least a portion of the indication of the at least one additional input to generate instructions for generating the at least one graphical component. In the example of FIG. 4A, the instructions output by computing system 400 may include instructions for prompting the user to clarify which suggested pediatrician with whom they would like to book Jane's appointment. Responsive to receiving input indicative of a selection of a suggested input from the one or more suggested inputs (e.g., selecting the button that corresponds to Pediatrician A), computing system 400 may update widget 455A. As such, in some examples, graphical components and/or graphical elements included within a graphical component that is generated for display on GUI 417 may be refreshed, deleted, etc. based on additional input from a user.

In general, though, graphical components and/or graphical elements included within a graphical component that is generated for display on GUI 417 may be refreshed, deleted, etc. based on a temporal parameter. That is, machine learning module 410 may further determine a temporal parameter for each widget and/or graphical element included within a widget generated for display on GUI 417, in which each widget may be refreshed, deleted, etc. based on its respective temporal parameter.

For example, in the example of FIG. 4A, machine learning module 410 may determine a temporal parameter for widget 455A that causes widget 455A to automatically update, regenerate, etc. based on the temporal parameter. In general, the temporal parameter may be a "useful until" date, e.g., a date and/or time at which a widget is no longer useful to the user, a refresh rate, e.g., a rate at which a widget is refreshed to include updated information, etc. As an example, in the example of FIG. 4A, machine learning module 410 may determine a temporal parameter for widget 455A that is the date and time for which Jane's appointment is scheduled. That is, once the date and time for the appointment has passed (i.e., Jane's appointment has occurred), widget 455A may be updated or deleted from GUI 417.

In some examples, with explicit consent from a user, computing system 400 may continuously or periodically retrieve information from one or more applications executing at computing device 412 to determine a temporal parameter for a respective widget and/or graphical element included within the widget. In some examples, computing system 400 may receive an indication of one or more user interactions with a widget to determine a temporal parameter for a respective widget and/or graphical element included within the widget. In some examples, the temporal parameter may be based on a condition. In some examples, the temporal parameter may be an instruction. For example, in the example of FIG. 4A, computing system 400 may determine a temporal parameter for widget 452A, such as "update this widget from the home screen once the user sends the money via interaction with the widget" and/or "delete this widget from the home screen once information from the banking application indicates the user sent the money to John D." As such, in some examples, widget 452A may be updated and/or deleted responsive to the user interacting with "Send" button 454 to send $20.00 from their checking account to John D.'s bank account, and/or responsive to computing system 400 receiving information from the banking application that indicates the transaction to John D. was successful.

As shown in the example of FIG. 4B, computing system 400 may update, based on the temporal parameter, instructions for generating at least one graphical component to update the at least one graphical component. That is, in some examples, computing system 400 may apply machine learning module 410 to at least the portion of the information and at least the portion of the indication of the natural language input at a first time, e.g., to generate widgets 452A and 455A of FIG. 4A. Then, based on the temporal parameter, computing system 400 may re-apply machine learning module 410, e.g., at a second time, to update the instructions for generating the at least one graphical component. For example, computing system 400 may apply machine learning module 410 to at least the portion of the information and at least the portion of the indication of the natural language input again to update the instructions for generating the at least one graphical component.

As shown in the example of FIG. 4B, in some examples, responsive to a user interacting with widget 455A of FIG. 4A to provide additional input, computing system 400 may update the set of instructions to include instructions for generating updated graphical components, display relevant information pertaining to a task, and/or provide functionality for performing the task again, e.g., with different parameters. In some examples, the at least one graphical component is a graphical component including a plurality of graphical elements, and to update the instructions for generating the at least one graphical component, computing system 400 may update, based on the temporal parameter, the instructions for generating the at least one graphical component to update at least one graphical element from the plurality of graphical elements. In some examples, updating the at least one graphical element may include updating the instructions for generating the at least one graphical component to delete the at least one graphical element.

For example, responsive to the user selecting button 456 of FIG. 4A that corresponds to Pediatrician A, computing system 400 may update the set of instructions to include instructions for generating widget 455B, which may be considered an updated version of widget 455A. As shown, widget 455B, titled "Jane's Appointment," may include one or more updated graphical elements, such as text information pertaining to Jane's appointment, e.g., the date ("Friday Oct 15, 2024"), a summary of the event ("Jane at Doctor's"), time ("1:10 PM-1:30 PM"), and specific pediatrician ("Pediatrician A") for which the appointment was booked. That is, widget 455B may be updated to provide the most recent and/or relevant information to the user about Jane's appointment. Furthermore, widget 455B may include one or more new graphical elements, such as "Call Doctor" button 462, which may be associated with at least one function for performing a task of rescheduling Jane's doctor's appointment. As such, in some examples, machine learning module 410 may intuitively determine additional actions or subtasks associated with a task that may be performed after a task is completed. In this way, users may not be required to explicitly provide input indicating their desire to perform such additional actions or subtasks; instead, computing system 400 may automatically determine the additional actions or subtasks, e.g., based on information retrieved from computing device 412, and automatically generate graphical components associated with functionality for completing the additional actions or subtasks.

Furthermore, the temporal parameter for widget 455B may be "Friday, October 15^{th}, 2024, at 1:30 PM." That is, the temporal parameter for widget 455B may be set to the date and/or time at which Jane's appointment is completed, and widget 455B is no longer useful to the user. In some examples, with explicit permission from the user, the user's location may be used to determine when a widget is no longer useful to the user. For example, widget 455B may be deleted once the user leaves the location of the pediatrician's office. As such, widget 455B may serve as a reminder for the user about Jane's appointment, but may be automatically deleted once the reminder is no longer needed (i.e., the appointment has concluded). As further shown in the example of FIG. 4B, GUI 417B includes widget 452B that indicates the first task of sending $20 to John was completed (e.g., as shown, widget 452B may include a check mark). In the example of FIG. 4B, computing system 400 may determine a temporal parameter for widget 452B, which may be a time parameter such as 30 minutes, 1 hour, 2 hours, 3 hours, 1 day, 1 week, etc. For example, computing system 400 may determine the temporal parameter for widget 452B to be 1 day. That is, GUI 417B may display widget 452B for 1 day, and then delete widget 452B from GUI 417B. As such, in some examples, widgets may be updated to indicate a task was completed, and serve as at least a temporary reminder that the task was completed. As such, in general, computing system 400 may update the set of instructions to include instructions for generating updated graphical components, in which the updated graphical components may indicate that the respective task was performed and/or show updated information.

As further shown in the example of FIG. 4B, the user may provide an indication of a natural language input that includes the utterance, "How many days until the kids start school?" UI generator module 408 may apply machine learning module 410 to this example indication and determine a user intent of determining how many days there are until the user's children start their next school year. UI generator module 408 may generate a set of instructions that include instructions for generating widget 463A, titled "Days until school starts," and may include functionality for counting down the days until the user's children start their next school year (e.g., based on information retrieved from a calendar application, etc.). That is, in some examples, one or more graphical components may simply provide relevant information, reminders, notes, etc. that may answer a user's query or intent. In this example, machine learning module 410 may determine the temporal parameter for a graphical element of widget 463A (e.g., text element 464A) to be a refresh rate of 1 refresh per day. As such, text element 464A may be updated each day to indicate the accurate number of days until the user's children start their next school year. Furthermore, a temporal parameter for widget 463A itself may be determined to be the date on which the next school year starts.

As shown in the example of FIG. 4C, in some examples, to update the instructions for generating the at least one graphical component, computing system 400 may update, based on the temporal parameter, the instructions for generating the at least one graphical component to delete the at least one graphical component. That is, in the example of FIG. 4C, computing system 400 may update, based on a temporal parameter of "Friday, October 15^{th}, 2024 at 1:30 PM," the instructions for generating widget 455B of FIG. 4B to generate updated widget 455C on GUI 417C. As shown, widget 455C may indicate the task of booking Jane's appointment was completed (e.g., as shown, widget 455C may include a check mark). In the example of FIG. 4C, computing system 400 may determine the temporal parameter for widget 455C to be 1 day, in which GUI 417C may display widget 455C for 1 day, and then automatically delete widget 455C from GUI 417C. For example, as shown, GUI 417C may not include widget 452B displayed on GUI 417B, e.g., GUI 417C may represent an example GUI in which 1 day has passed and widget 452B has been deleted. As further shown in the example of FIG. 4C, widget 463B, which may be an updated version of widget 463A displayed on GUI 417B, may include updated text element 464B that indicates there are now 24 days until school starts (i.e., 1 day has passed).

In this way, rather than having to navigate through multiple applications to perform tasks, access desired information, etc., a user may simply say their intent, and UI generator module 408 may generate instructions for generating widgets on GUI 417 that are automatically updated based on various temporal parameters. In this way, GUI 417 may only display graphical components and/or graphical elements that are relevant to a user's intents and/or are up to date, e.g., the graphical components and/or graphical elements may be updated to show most recent and most accurate information. As such, the graphical components and/or graphical elements may be presented in a more concise, less busy, and more organized manner, which may reduce the overwhelmingness of information pertaining to various tasks and/or user intents. An improved human-computer interface may therefore be provided. In this way, the techniques described herein may reduce the mental load, complexity, and time required for users to complete various tasks and access desired information, and therefore may provide an overall improved user experience when operating user devices.

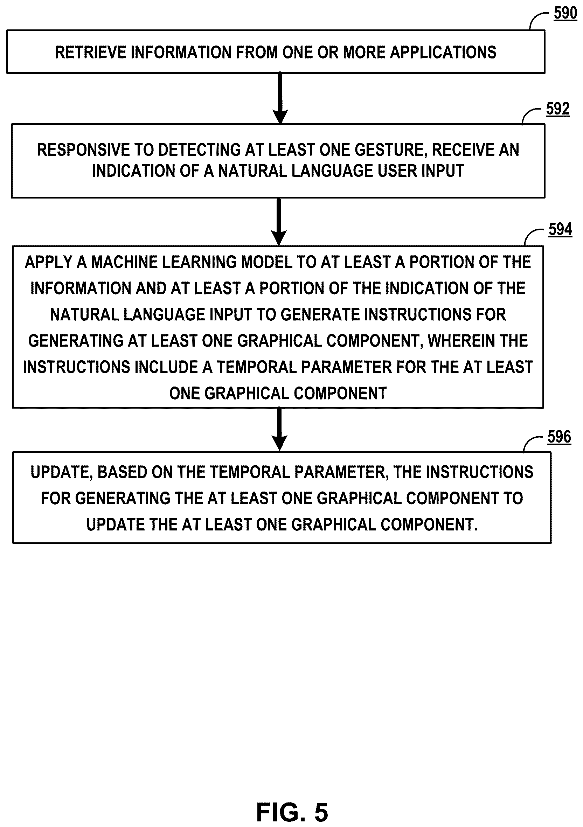

FIG. 5 is a flowchart illustrating an example operation for dynamically generating custom graphical user interfaces for one or more applications, in accordance with one or more techniques of this disclosure. The example of FIG. 5 is described with respect to FIGS. 1-4C.

Computing system 400 retrieves information from one or more applications (590). Computing system 400 receives an indication of a natural language input (592). In some examples, the indication of the natural language input is received in response to at least one gesture detected at a location of a presence-sensitive display, such as one of UI components 402 and/or one of UI components 232.

Computing system 400 applies machine learning module 410 to at least a portion of the information and at least a portion of the indication of the natural language input to generate instructions file 346 for generating at least one graphical component, in which instructions file 346 include a temporal parameter for the at least one graphical component (594). In some examples, machine learning module 410 is or applies a large language model. In some examples, computing system 400 applies machine learning module 410 to at least the portion of the information and at least the portion of the indication of the natural language input to determine one or more of explicit temporal information and implicit temporal information, in which machine learning module 410 further determines the temporal parameter based on one or more of the explicit temporal information and the implicit temporal information.

In some examples, to apply machine learning module 410 to at least the portion of the information and at least the portion of the indication of the natural language input to generate instructions file 346 for generating the at least one graphical component, computing system 400 outputs instructions for prompting a user to provide at least one additional input, receives an indication of the at least one additional input, and applies machine learning module 410 to at least a portion of the indication of the at least one additional input to generate instructions file 346 for generating the at least one graphical component.

Computing system 400 updates, based on the temporal parameter, instructions file 346 for generating the at least one graphical component to update the at least one graphical component (596). In some examples, computing system 400 applies machine learning module 410 to at least the portion of the information and at least the portion of the indication of the natural language input at a first time, and to update instructions file 346 for generating the at least one graphical component, computing system 400 applies, at a second time that is based on the temporal parameter, machine learning module 410 to at least the portion of the information and at least the portion of the indication of the natural language input to update instructions file 346 for generating the at least one graphical component.

In some examples, to apply machine learning module 410 to at least the portion of the information and at least the portion of the indication of the natural language input to generate instructions file 346 for generating the at least one graphical component, computing system 400 determines a plurality of user interface layouts by applying machine learning module 410 to at least the portion of the information and at least the portion of the indication of the natural language input. In some examples, each user interface layout is associated with one or more of at least one unique temporal parameter and at least one unique visual characteristic. In some examples, the portion of the information is indicative of one or more rules for the plurality of user interface layouts. In some examples, the indication of the natural language input indicates a selected user interface layout from the plurality of user interface layouts, and computing system 400 generates instructions file 346 for generating the at least one graphical component in accordance with the selected user interface layout. In some examples, computing system 400 determines a priority score for each user interface layout from the plurality of user interface layouts, and generates instructions file 346 for generating the at least one graphical component in accordance with a user interface layout with a highest priority score.

In some examples, the at least one graphical component is a graphical component including a plurality of graphical elements, and to update instructions file 346 for generating the at least one graphical component, computing system 400 updates, based on the temporal parameter, instructions file 346 for generating the at least one graphical component to update at least one graphical element from the plurality of graphical elements. In some examples, to update instructions file 346 for generating the at least one graphical component to update the at least one graphical element, computing system 400 updates, based on the temporal parameter, instructions file 346 for generating the at least one graphical component to delete the at least one graphical element. In some examples, to update instructions file 346 for generating the at least one graphical component, computing system 400 updates, based on the temporal parameter, instructions file 346 for generating the at least one graphical component to delete the at least one graphical component.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that may be accessed by one or more computers or one or more processors to retrieve instructions, code and/or data structures for implementation of the techniques described in this disclosure. A computer program product may include a computer-readable medium.

By way of example, and not limitation, such computer-readable storage media may comprise RAM, ROM, EEPROM, CD-ROM or other optical disk storage, magnetic disk storage, or other magnetic storage devices, flash memory, or any other storage medium that may be used to store desired program code in the form of instructions or data structures and that may be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structures or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, various units may be combined in a hardware unit or provided by a collection of intraoperative hardware units, including one or more processors, in conjunction with suitable software and/or firmware.

It is to be recognized that, depending on the example, certain acts or events of any of the techniques described herein may be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In some examples, a computer-readable storage medium comprises a non-transitory medium. The term "non-transitory" indicates that the storage medium is not embodied in a carrier wave or a propagated signal. In certain examples, a non-transitory storage medium may store data that can, over time, change (e.g., in RAM or cache).

Example 1: A method includes retrieving, by a computing system, information from one or more applications; receiving, by the computing system, an indication of a natural language input; applying, by the computing system, a machine learning model to at least a portion of the information and at least a portion of the indication of the natural language input to generate instructions for generating at least one graphical component, wherein the instructions include a temporal parameter for the at least one graphical component; and updating, by the computing system, and based on the temporal parameter, the instructions for generating the at least one graphical component to update the at least one graphical component.

Example 2: The method of example 1, further includes applying, by the computing system, the machine learning model to at least the portion of the information and at least the portion of the indication of the natural language input to determine one or more of explicit temporal information and implicit temporal information, wherein the machine learning model further determines the temporal parameter based on one or more of the explicit temporal information and the implicit temporal information.

Example 3: The method of any of examples 1 and 2, wherein the machine learning model is applied to at least the portion of the information and at least the portion of the indication of the natural language input at a first time, and wherein updating the instructions for generating the at least one graphical component further comprises: applying, by the computing system, and at a second time that is based on the temporal parameter, the machine learning model to at least the portion of the information and at least the portion of the indication of the natural language input to update the instructions for generating the at least one graphical component.

Example 4: The method of any of examples 1 through 3, wherein the at least one graphical component is a graphical component including a plurality of graphical elements, wherein updating the instructions for generating the at least one graphical component further comprises: updating, by the computing system, and based on the temporal parameter, the instructions for generating the at least one graphical component to update at least one graphical element from the plurality of graphical elements.

Example 5: The method of example 4, wherein updating the instructions for generating the at least one graphical component to update the at least one graphical element further comprises: updating, by the computing system, and based on the temporal parameter, the instructions for generating the at least one graphical component to delete the at least one graphical element.

Example 6: The method of any of examples 1 through 5, wherein updating the instructions for generating the at least one graphical component further comprises: updating, by the computing system, and based on the temporal parameter, the instructions for generating the at least one graphical component to delete the at least one graphical component.

Example 7: The method of any of examples 1 through 6, wherein applying the machine learning model to at least the portion of the information and at least the portion of the indication of the natural language input to generate the instructions for generating the at least one graphical component further comprises: determining, by the computing system, a plurality of user interface layouts by applying the machine learning model to at least the portion of the information and at least the portion of the indication of the natural language input, wherein each user interface layout is associated with one or more of at least one unique temporal parameter and at least one unique visual characteristic.

Example 8: The method of example 7, wherein the portion of the information is indicative of one or more rules for the plurality of user interface layouts.

Example 9: The method of any of examples 7 and 8, wherein the indication of the natural language input indicates a selected user interface layout from the plurality of user interface layouts, the method further includes generating, by the computing system, the instructions for generating the at least one graphical component in accordance with the selected user interface layout.

Example 10: The method of any of examples 7 through 9, the method further includes determining, by the computing system, a priority score for each user interface layout from the plurality of user interface layouts; and generating, by the computing system, the instructions for generating the at least one graphical component in accordance with a user interface layout with a highest priority score.

Example 11: The method of any of examples 1 through 10, wherein applying the machine learning model to at least the portion of the information and at least the portion of the indication of the natural language input to generate the instructions for generating the at least one graphical component further comprises: outputting, by the computing system, instructions for prompting a user to provide at least one additional input, receiving, by the computing system, an indication of the at least one additional input; and applying, by the computing system, the machine learning model to at least a portion of the indication of the at least one additional input to generate the instructions for generating the at least one graphical component.

Example 12: The method of any of examples 1 through 11, wherein the machine learning model is a large language model.

Example 13: The method of any of examples 1 through 12, wherein the indication of the natural language input is received in response to a gesture detected at a location of a presence-sensitive display.

Example 14: A computing system includes one or more processors; and one or more storage devices that store instructions, wherein the instructions, when executed by the one or more processors, cause the one or more processors to: retrieve information from one or more applications; receive an indication of a natural language input; apply a machine learning model to at least a portion of the information and at least a portion of the indication of the natural language input to generate instructions for generating at least one graphical component, wherein the instructions include a temporal parameter for the at least one graphical component; and update, based on the temporal parameter, the instructions for generating the at least one graphical component to update the at least one graphical component.

Example 15: The computing system of example 14, wherein the instructions further cause the one or more processors to: apply the machine learning model to at least the portion of the information and at least the portion of the indication of the natural language input to determine one or more of explicit temporal information and implicit temporal information, wherein the machine learning model further determines the temporal parameter based on one or more of the explicit temporal information and the implicit temporal information.

Example 16: The computing system of any of examples 14 and 15, wherein the machine learning model is applied to at least the portion of the information and at least the portion of the indication of the natural language input at a first time, and wherein to update the instructions for generating the at least one graphical component, the instructions further cause the one or more processors to: apply, at a second time that is based on the temporal parameter, the machine learning model to at least the portion of the information and at least the portion of the indication of the natural language input to update the instructions for generating the at least one graphical component.

Example 17: The computing system of any of examples 14 through 16, wherein the at least one graphical component is a graphical component including a plurality of graphical elements, wherein to update the instructions for generating the at least one graphical component, the instructions further cause the one or more processors to: update, based on the temporal parameter, the instructions for generating the at least one graphical component to update at least one graphical element from the plurality of graphical elements.

Example 18: The computing system of example 17, wherein to update the instructions for generating the at least one graphical component to update the at least one graphical element, the instructions further cause the one or more processors to: update, based on the temporal parameter, the instructions for generating the at least one graphical component to delete the at least one graphical element.

Example 19: The computing system of any of examples 14 through 18, wherein to update the instructions for generating the at least one graphical component, the instructions further cause the one or more processors to: update, based on the temporal parameter, the instructions for generating the at least one graphical component to delete the at least one graphical component.

Example 20: The computing system of any of examples 14 through 19, wherein to apply the machine learning model to at least the portion of the information and at least the portion of the indication of the natural language input to generate the instructions for generating the at least one graphical component, the instructions further cause the one or more processors to: determine a plurality of user interface layouts by applying the machine learning model to at least the portion of the information and at least the portion of the indication of the natural language input, wherein each user interface layout is associated with one or more of at least one unique temporal parameter and at least one unique visual characteristic.

Example 21: The computing system of example 20, wherein the portion of the information is indicative of one or more rules for the plurality of user interface layouts.

Example 22: The computing system of any of examples 20 and 21, wherein the indication of the natural language input indicates a selected user interface layout from the plurality of user interface layouts, wherein the instructions further cause the one or more processors to: generate the instructions for generating the at least one graphical component in accordance with the selected user interface layout.

Example 23: The computing system of any of examples 20 through 22, wherein the instructions further cause the one or more processors to: determine a priority score for each user interface layout from the plurality of user interface layouts; and generate the instructions for generating the at least one graphical component in accordance with a user interface layout with a highest priority score.

Example 24: The computing system of any of examples 14 through 23, wherein to apply the machine learning model to at least the portion of the information and at least the portion of the indication of the natural language input to generate the instructions for generating the at least one graphical component, the instructions further cause the one or more processors to: output instructions for prompting a user to provide at least one additional input; receive an indication of the at least one additional input; and apply the machine learning model to at least a portion of the indication of the at least one additional input to generate the instructions for generating the at least one graphical component.

Example 25: The computing system of any of examples 14 through 24, wherein the machine learning model is a large language model.

Example 26: The computing system of any of examples 14 through 25, wherein the indication of the natural language input is received in response to at least one gesture detected at a location of a presence-sensitive display.

Example 27: A non-transitory computer-readable storage medium encoded with instructions that, when executed by one or more processors, cause one or more processors to: retrieve information from one or more applications; receive an indication of a natural language input; apply a machine learning model to at least a portion of the information and at least a portion of the indication of the natural language input to generate instructions for generating at least one graphical component, wherein the instructions include a temporal parameter for the at least one graphical component; and update, based on the temporal parameter, the instructions for generating the at least one graphical component to update the at least one graphical component.

Example 28: The non-transitory computer-readable storage medium of example 27, wherein the instructions further cause the one or more processors to: apply the machine learning model to at least the portion of the information and at least the portion of the indication of the natural language input to determine one or more of explicit temporal information and implicit temporal information, wherein the machine learning model further determines the temporal parameter based on one or more of the explicit temporal information and the implicit temporal information.

Example 29: The non-transitory computer-readable storage medium of any of examples 27 and 28, wherein the machine learning model is applied to at least the portion of the information and at least the portion of the indication of the natural language input at a first time, and wherein to update the instructions for generating the at least one graphical component, the instructions further cause the one or more processors to: apply, at a second time that is based on the temporal parameter, the machine learning model to at least the portion of the information and at least the portion of the indication of the natural language input to update the instructions for generating the at least one graphical component.

Example 30: The non-transitory computer-readable storage medium of any of examples 27 through 29, wherein the at least one graphical component is a graphical component including a plurality of graphical elements, wherein to update the instructions for generating the at least one graphical component, the instructions further cause the one or more processors to: update, based on the temporal parameter, the instructions for generating the at least one graphical component to update at least one graphical element from the plurality of graphical elements.

Example 31: The non-transitory computer-readable storage medium of example 30, wherein to update the instructions for generating the at least one graphical component to update the at least one graphical element, the instructions further cause the one or more processors to: update, based on the temporal parameter, the instructions for generating the at least one graphical component to delete the at least one graphical element.

Example 32: The non-transitory computer-readable storage medium of any of examples 27 through 31, wherein to update the instructions for generating the at least one graphical component, the instructions further cause the one or more processors to: update, based on the temporal parameter, the instructions for generating the at least one graphical component to delete the at least one graphical component.

Example 33: The non-transitory computer-readable storage medium of any of examples 27 through 32, wherein to apply the machine learning model to at least the portion of the information and at least the portion of the indication of the natural language input to generate the instructions for generating the at least one graphical component, the instructions further cause the one or more processors to: determine a plurality of user interface layouts by applying the machine learning model to at least the portion of the information and at least the portion of the indication of the natural language input, wherein each user interface layout is associated with one or more of at least one unique temporal parameter and at least one unique visual characteristic.

Example 34: The non-transitory computer-readable storage medium of example 33, wherein the portion of the information is indicative of one or more rules for the plurality of user interface layouts.

Example 35: The non-transitory computer-readable storage medium of any of examples 33 and 34, wherein the indication of the natural language input indicates a selected user interface layout from the plurality of user interface layouts, wherein the instructions further cause the one or more processors to: generate the instructions for generating the at least one graphical component in accordance with the selected user interface layout.

Example 36: The non-transitory computer-readable storage medium of any of examples 33 through 35, wherein the instructions further cause the one or more processors to: determine a priority score for each user interface layout from the plurality of user interface layouts; and generate the instructions for generating the at least one graphical component in accordance with a user interface layout with a highest priority score.

Example 37: The non-transitory computer-readable storage medium of any of examples 27 through 36, wherein to apply the machine learning model to at least the portion of the information and at least the portion of the indication of the natural language input to generate the instructions for generating the at least one graphical component, the instructions further cause the one or more processors to: output instructions for prompting a user to provide at least one additional input; receive an indication of the at least one additional input; and apply the machine learning model to at least a portion of the indication of the at least one additional input to generate the instructions for generating the at least one graphical component.

Example 38: The non-transitory computer-readable storage medium of any of examples 27 through 37, wherein the machine learning model is a large language model.

Example 39: The non-transitory computer-readable storage medium of any of examples 27 through 38, wherein the indication of the natural language input is received in response to at least one gesture detected at a location of a presence-sensitive display.

Example 40: A computing system comprising means for performing any combination of the methods of examples 1-13.

Example 41: A computer program product for generating custom graphical components, the computer program product comprising instructions that, when executed by one or more processors, cause the one or more processors to: retrieve information from one or more applications; receive an indication of a natural language input; apply a machine learning model to at least a portion of the information and at least a portion of the indication of the natural language input to generate instructions for generating at least one graphical component, wherein the instructions include a temporal parameter for the at least one graphical component; and update, based on the temporal parameter, the instructions for generating the at least one graphical component to update the at least one graphical component.

Example 42: The computer program product of example 41, wherein the instructions further cause the one or more processors to: apply the machine learning model to at least the portion of the information and at least the portion of the indication of the natural language input to determine one or more of explicit temporal information and implicit temporal information, wherein the machine learning model further determines the temporal parameter based on one or more of the explicit temporal information and the implicit temporal information.

Example 43: The computer program product of example 41 or 42, wherein the machine learning model is applied to at least the portion of the information and at least the portion of the indication of the natural language input at a first time, and wherein to update the instructions for generating the at least one graphical component, the instructions further cause the one or more processors to: apply, at a second time that is based on the temporal parameter, the machine learning model to at least the portion of the information and at least the portion of the indication of the natural language input to update the instructions for generating the at least one graphical component.

Example 44: The computer program product of any of examples 41 through 43, wherein the at least one graphical component is a graphical component including a plurality of graphical elements, wherein to update the instructions for generating the at least one graphical component, the instructions further cause the one or more processors to: update, based on the temporal parameter, the instructions for generating the at least one graphical component to update at least one graphical element from the plurality of graphical elements.

Example 45: The computer program product of example 44, wherein to update the instructions for generating the at least one graphical component to update the at least one graphical element, the instructions further cause the one or more processors to: update, based on the temporal parameter, the instructions for generating the at least one graphical component to delete the at least one graphical element.

Example 46: The computer program product of any of examples 41 through 45, wherein to update the instructions for generating the at least one graphical component, the instructions further cause the one or more processors to: update, based on the temporal parameter, the instructions for generating the at least one graphical component to delete the at least one graphical component.

Example 47: The computer program product of any of examples 41 through 46, wherein to apply the machine learning model to at least the portion of the information and at least the portion of the indication of the natural language input to generate the instructions for generating the at least one graphical component, the instructions further cause the one or more processors to: determine a plurality of user interface layouts by applying the machine learning model to at least the portion of the information and at least the portion of the indication of the natural language input, wherein each user interface layout is associated with one or more of at least one unique temporal parameter and at least one unique visual characteristic.

Example 48. The computer program product of example 47, wherein the portion of the information is indicative of one or more rules for the plurality of user interface layouts.

Example 49. The computer program product of any of examples 47 and 48, wherein the indication of the natural language input indicates a selected user interface layout from the plurality of user interface layouts, wherein the instructions further cause the one or more processors to: generate the instructions for generating the at least one graphical component in accordance with the selected user interface layout.

Example 50: The computer program product of any of examples 47 through 49, wherein the instructions further cause the one or more processors to: determine a priority score for each user interface layout from the plurality of user interface layouts; and generate the instructions for generating the at least one graphical component in accordance with a user interface layout with a highest priority score.

Example 51: The computer program product of any of examples 41 through 50, wherein to apply the machine learning model to at least the portion of the information and at least the portion of the indication of the natural language input to generate the instructions for generating the at least one graphical component, the instructions further cause the one or more processors to: output instructions for prompting a user to provide at least one additional input; receive an indication of the at least one additional input; and apply the machine learning model to at least a portion of the indication of the at least one additional input to generate the instructions for generating the at least one graphical component.

Example 52: The computer program product of any of examples 41 through 51, wherein the machine learning model is a large language model.

Example 53: The computer program product of any of examples 41 through 52, wherein the indication of the natural language input is received in response to at least one gesture detected at a location of a presence-sensitive display.

Various examples have been described. These and other examples are within the scope of the following claims.

## Claims

1. A method comprising:
retrieving, by a computing system, information from one or more applications;
receiving, by the computing system, an indication of a natural language input;
applying, by the computing system, a machine learning model to at least a portion of the information and at least a portion of the indication of the natural language input to generate instructions for generating at least one graphical component, wherein the instructions include a temporal parameter for the at least one graphical component; and
updating, by the computing system, and based on the temporal parameter, the instructions for generating the at least one graphical component to update the at least one graphical component.

2. The method of claim 1, further comprising:
applying, by the computing system, the machine learning model to at least the portion of the information and at least the portion of the indication of the natural language input to determine one or more of explicit temporal information and implicit temporal information, wherein the machine learning model further determines the temporal parameter based on one or more of the explicit temporal information and the implicit temporal information.

3. The method of claim 1 or claim 2, wherein the machine learning model is applied to at least the portion of the information and at least the portion of the indication of the natural language input at a first time, and wherein updating the instructions for generating the at least one graphical component further comprises:
applying, by the computing system, and at a second time that is based on the temporal parameter, the machine learning model to at least the portion of the information and at least the portion of the indication of the natural language input to update the instructions for generating the at least one graphical component.

4. The method of any of claims 1 to 3, wherein the at least one graphical component is a graphical component including a plurality of graphical elements, wherein updating the instructions for generating the at least one graphical component further comprises:
updating, by the computing system, and based on the temporal parameter, the instructions for generating the at least one graphical component to update at least one graphical element from the plurality of graphical elements.

5. The method of claim 4, wherein updating the instructions for generating the at least one graphical component to update the at least one graphical element further comprises:
updating, by the computing system, and based on the temporal parameter, the instructions for generating the at least one graphical component to delete the at least one graphical element.

6. The method of any of claims 1 to 5, wherein updating the instructions for generating the at least one graphical component further comprises:
updating, by the computing system, and based on the temporal parameter, the instructions for generating the at least one graphical component to delete the at least one graphical component.

7. The method of any of claims 1 to 6, wherein applying the machine learning model to at least the portion of the information and at least the portion of the indication of the natural language input to generate the instructions for generating the at least one graphical component further comprises:
determining, by the computing system, a plurality of user interface layouts by applying the machine learning model to at least the portion of the information and at least the portion of the indication of the natural language input, wherein each user interface layout is associated with one or more of at least one unique temporal parameter and at least one unique visual characteristic.

8. The method of claim 7, wherein the portion of the information is indicative of one or more rules for the plurality of user interface layouts.

9. The method of claim 7 or claim 8, wherein the indication of the natural language input indicates a selected user interface layout from the plurality of user interface layouts, the method further comprising:
generating, by the computing system, the instructions for generating the at least one graphical component in accordance with the selected user interface layout.

10. The method of any of claims 7 to 9, the method further comprising:
determining, by the computing system, a priority score for each user interface layout from the plurality of user interface layouts; and
generating, by the computing system, the instructions for generating the at least one graphical component in accordance with a user interface layout with a highest priority score.

11. The method of any of claims 1 to 10, wherein applying the machine learning model to at least the portion of the information and at least the portion of the indication of the natural language input to generate the instructions for generating the at least one graphical component further comprises:
outputting, by the computing system, instructions for prompting a user to provide at least one additional input,
receiving, by the computing system, an indication of the at least one additional input; and
applying, by the computing system, the machine learning model to at least a portion of the indication of the at least one additional input to generate the instructions for generating the at least one graphical component.

12. The method of any of claims 1 to 11, wherein the machine learning model is a large language model.

13. The method of any of claims 1 to 12, wherein the indication of the natural language input is received in response to at least one gesture detected at a location of a presence-sensitive display.

14. A computer program product comprising one or more instructions that, when executed by at least one processor, cause the at least one processor to perform any combination of the methods of claims 1-13.

15. A computing system comprising means for performing any combination of the methods of claims 1-13.
